# EUROPEAN PATENT SPECIFICATION

(11) **EP 2 384 945 B1**
(45) Date of publication and mention of the grant of the patent: **18.07.2012**
(21) Application number: 11174742.4
(22) Date of filing: 08.02.2008
(51) Int. Cl.: B60W 10/06, B60W 10/08, B60W 20/00, B60W 10/10, B60K 6/445, B60K 6/547, B60K 6/365, B60K 6/48

(54) **Control device for vehicular drive system**
Steuervorrichtung für ein Fahrzeugantriebssystem
Dispositif de commande pour système d'entraînement de véhicule

(30) Priority: 09.02.2007 JP 2007031320; 18.01.2008 JP 2008009883
(43) Date of publication of application: 09.11.2011
(62) Divisional of application: 09006212.6
(73) Proprietor: Toyota Jidosha Kabushiki Kaisha, Toyota-shi, Aichi-ken, 471-8571 (JP)
(72) Inventor: Imai, Keita c/o Toyota Jidosha Kabushiki Kaisha, Aichi-ken 471-8571 (JP); Shibata, Hiroyuki c/o Toyota Jidosha Kabushiki Kaisha, Aichi-ken 471-8571 (JP); Matsubara, Tooru c/o Toyota Jidosha Kabushiki Kaisha, Aichi-ken 471-8571 (JP); Tabata, Atsushi c/o Toyota Jidosha Kabushiki Kaisha, Aichi-ken 471-8571 (JP); Iwase, Yuji c/o Toyota Jidosha Kabushiki Kaisha, Aichi-ken 471-8571 (JP); Imamura, Tatsuya c/o Toyota Jidosha Kabushiki Kaisha, Aichi-ken 471-8571 (JP); Kumazaki, Kenta c/o Toyota Jidosha Kabushiki Kaisha, Aichi-ken 471-8571 (JP); Muta, Koichior c/o Toyota Jidosha Kabushiki Kaisha, Aichi-ken 471-8571 (JP); Kaifuku, Masakazu c/o Aisin AW Co., Ltd, Aichi-ken (JP); Kato, Hidenori c/o Aisin AW Co., Ltd, Aichi-ken (JP)
(74) Representative: Albutt, Anthony John

(56) References cited:
- JP-A- 2004 153 946
- JP-A- 2005 264 762
- US-A- 5 833 572
- US-B1- 6 443 126

## Description

### BACKGROUND OF THE INVENTION

### Field of the invention

This invention relates to a control device for a vehicular drive system including an electrically controlled differential portion having a differential mechanism operative to perform a differential action and, more particularly, to a technology of appropriately limiting an engine rotation speed.

### Description of the Related Art

A control device for a vehicular drive system has heretofore been well known as including an electrically controlled differential portion having a differential mechanism. The differential device includes a first element connected to an engine, a second element connected to a first electric motor, and a third element connected to a power transmitting member to allow an output of the engine to be distributed to the first electric motor and power transmitting member.

For instance, Patent Publication 1 (Japanese Patent Application Publication No. 2005-264762) discloses the control device for the vehicular drive system of such a structure described above. With the control device of such a vehicular drive system, the differential mechanism, comprised of a planetary gear set, further includes a second electric motor connected to the power transmitting member, and a shifting portion comprised of a step-variable type automatic transmission disposed in a power transmitting path between the power transmitting member and drive wheels. Such a structure allows the whole drive system to establish, an overall speed ratio (total speed ratio) with a speed ratio of the electrically controlled differential portion, rendered operative to function as a continuously variable transmission, and a speed ratio corresponding to each gear position (shifting position) of the shifting portion.

Besides the foregoing, various technologies have heretofore been known as disclosed in Patent Publication 2 (Japanese Patent Application Publication No. 2003-193878), Patent Publication 3 (Japanese Patent Application Publication No. 2004-153946) and Patent Publication 4 (Japanese Patent Application Publication No. 2005-105957).

Meanwhile, it is conceived that with the control device for the vehicular drive system set forth above, a rapid drop occurs in load of the vehicular drive system under a situation described below. That is, such a rapid drop in load occurs during a vehicle running in an engine running mode under a power-on state, in which at least the engine is caused to serve as a drive power source, due to some reasons. Such reasons arise when a shifting portion is placed in a neutral state due to, for instance, a "D→N" shift; a failure takes place in the shifting portion with a resultant drop in a clutch engaging pressure of an engaging device engaged when the shifting portion establishes a gear position; and slippages occur in the drive wheels.

Then, due to the presence of the power-on state, an engine rotation speed increases. This causes a rotation speed of the second electric motor and rotation speed of a given rotary element (such as, for instance, an input-line rotary member) of the shifting portion to increase to high rotation speeds of the extents exceeding, for instance, allowable rotation. This results in a fear of a drop occurring in durability of the second electric motor and shifting portion.

Here, an exemplary case has been described above with reference to the vehicular drive system having the electrically controlled differential portion and shifting portion. However, even with a vehicular drive system having no shifting portion, if the load of the vehicular drive system rapidly drops during the running of the vehicle in the engine running mode under the power-on state, the engine rotation speed increases. This causes the second electric motor to rotate at a high speed, resulting in a fear of a drop occurring in durability of the second electric motor.

### SUMMARY OF THE INVENTION

The present invention has been completed with the above views in mind and has an object to provide a control device for a vehicular drive system that can suppress the unwanted increase in the rotation speed of a second electric motor or a given rotary element of a shifting portion for thereby improving durability of the second electric motor or shifting portion.
Aspects of the invention are set out in the accompanying claims.

In an arrangement of the present invention for achieving the above object, a control device for a vehicular drive system is featured by (a) the vehicular drive system includes (i) an electrically controlled differential portion including a differential mechanism having a first element connected to an engine in a drive-power transmissive state, a second element connected to a first electric motor, and a third element connected to both a power transmitting member and a second electric motor, and distributing an output of the engine to the first electric motor and the power transmitting member, and (ii) a shifting portion disposed in a power transmitting path between the power transmitting member and drive wheels; and (b) when a rotation speed of a given rotary element of the shifting portion exceeds a first given rotation speed, or when falling of the rotation speed of the given rotary element of the shifting portion in a given high speed rotation state is predicted, the control device limits a rotation speed of the engine. The rotation speed of the engine is limited by a third electric motor connected to the engine.

The electrically controlled (differential portion of the vehicular drive system may be operative as a continuously variable transmission with an operating state of the first electric motor being controlled.

### BRIEF DESCRIPTION OF THE DRAWINGS

Fig. 1 is a skeleton diagram showing structure of a vehicular drive system for use in a hybrid vehicle, not within the scope of the claims.

Fig. 2 is a functional diagram illustrating combined operations of hydraulically operated frictional coupling devices for use in the vehicular drive system shown in Fig. 1.

Fig. 3 is a collinear chart indicating mutually relative rotating speeds of rotary elements establishing various gear positions in the vehicular drive system shown in Fig. 1.

Fig. 4 is a view showing an electronic control unit with input and output signals associated therewith which is provided in the vehicular drive system shown in Fig. 1.

Fig. 5 is a circuit diagram showing a major portion of a hydraulic control circuit associated with linear solenoid valves arranged to control operations of respective hydraulic actuators of clutches C and brakes B.

Fig. 6 is a view showing one example of a manually operated shifting device including a shift lever and operable to select one of a plurality of shift positions of multiple kinds.

Fig. 7 is a functional block diagram illustrating major control functions of the electronic control unit of Fig. 4.

Fig. 8 is a view illustrating one example of a shifting map for use in performing a shifting control of the drive system and one example of drive-power-source map defining boundary lines for use in a drive-power-source switching control between an engine-drive mode and a motor-drive mode with those maps being related to each other.

Fig. 9 shows in a dotted line an optimum fuel curve of an engine which is one example of a fuel map.

Fig. 10 is a view showing one example of an engine upper limit rotation speed map for use in controllably limiting an engine rotation speed.

Fig. 11 is a flowchart illustrating a basic sequence of control operations to be executed by the electronic control device shown in Fig. 4, i.e., a basic sequence of control operations to be executed for suppressing an undesired increase in rotation speed of a second electric motor to allow the second electric motor to have improved durability.

Fig. 12 is a functional block diagram, corresponding to Fig. 7, which illustrates a major part of control function to be performed by the electronic control device shown in Fig. 4.

Fig. 13 is a view showing one example of a given variation map (second electric motor rotation speed variation determining value) for use in predicting that a second electric motor allowable rotation speed falls in a given high speed rotation state.

Fig. 14 is a flowchart of another embodiment, corresponding to Fig. 11, which illustrates a basic sequence of control operations to be executed by the electronic control device shown in Fig. 4, i.e., a basic sequence of control operations to be executed for suppressing the undesired increase in rotation speed of the second electric motor for improving durability of the second electric motor.

Fig. 15 is a view showing one example of the engine upper limit rotation speed map for use in controllably limiting the engine rotation speed.

Fig. 16 is a flowchart, corresponding to Fig. 11, which illustrates a basic sequence of control operations to be executed by the electronic control device shown in Fig. 4, i:e., a basic sequence of control operations to be executed for suppressing an undesired increase in rotation speed of an input shaft of an automatic shifting portion for improving durability of the automatic shifting portion.

Fig. 17 is a view showing one example of a given variation map (shifting-portion input rotation speed variation determining value) for use in predicting whether or not a shifting-portion input rotation speed falls in a given high speed rotation state.

Fig. 18 a flowchart, corresponding to Fig 14, which illustrates a basic sequence of control operations to be executed by the electronic control device shown in Fig. 4, i.e., a basic sequence of control operations to be executed for suppressing the undesired increase in rotation speed of the input shaft of the automatic shifting portion for improving durability of the automatic shifting portion.

Fig. 19 is a skeleton view for explaining structure of a drive system for a hybrid vehicle according to an embodiment of the present embodiment.

Fig. 20 is a functional diagram for explaining a major part of a control function of the electronic control unit in an embodiment shown in Fig. 19.

Fig. 21 is a flowchart for explaining a major part of a control operation of the electronic control unit 80 in the embodiment shown in Fig. 19.

### DETAILED DESCRIPTION OF THE PREFERRED EMBODIMENTS

Now, various examples and an embodiment according to the present invention will be described below in detail with reference to the accompanying drawings.

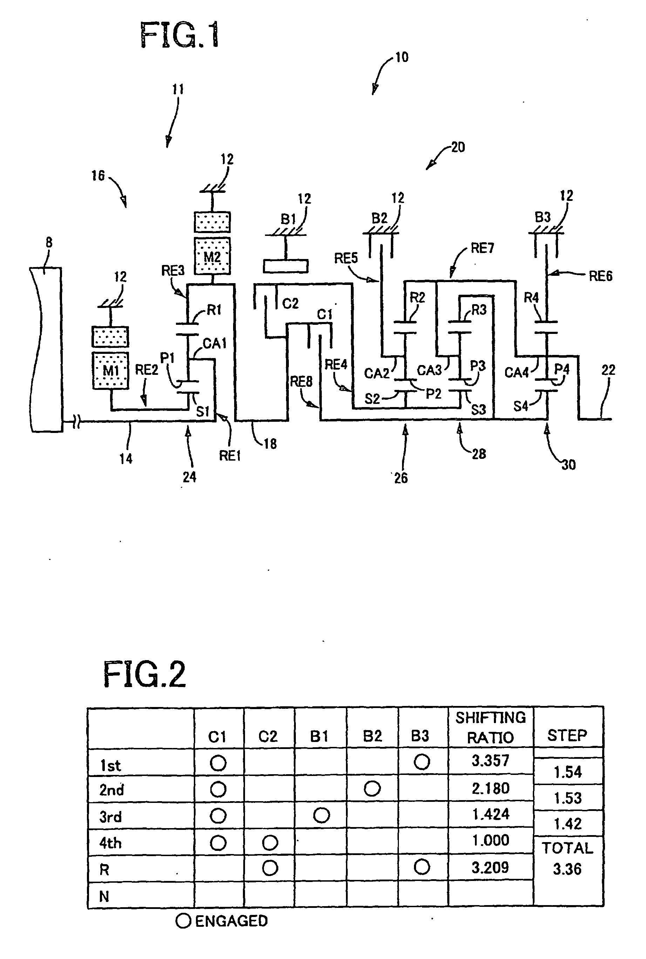

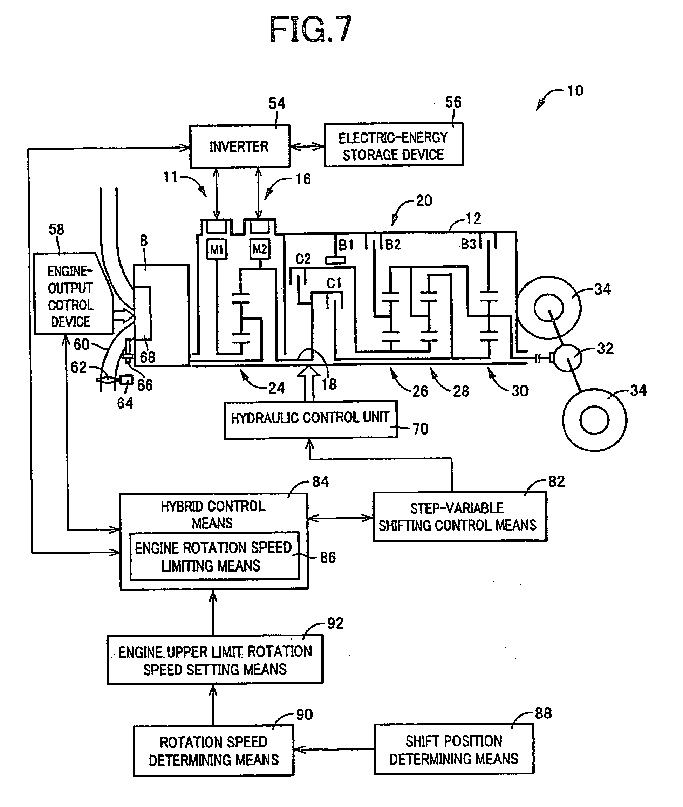

As shown in Fig. 1, the shifting mechanism 10 includes a transmission case 12, an input shaft 14, an electrically controlled differential portion 11, an automatic transmission portion 20, and an output shaft 22. In detail, the transmission case (hereinafter referred to as "a case 12") is mounted on a vehicle body as a non-rotary member, and the input shaft 14 is coaxially disposed inside the case 12 as an input rotary member. The electrically controlled differential portion 11 (hereinafter referred to as a "differential portion 11") is coaxially connected to the input shaft 14 either directly or indirectly via a pulsation absorbing damper (vibration damping device) not shown, and serving as a continuously variable shifting portion. The automatic transmission portion 20 is connected in series in a power transmitting path between the differential portion 11 and drive wheels 34 (see Fig. 7) through a power transmitting member 18 (power transmitting shaft). The output shaft 22 connected to the automatic shifting portion 20 and serving as an output rotary member.

The transmission mechanism 10 is suitably applied to an FR (front-engine and reverse-drive) type vehicle and mounted on a vehicle along a fore and aft direction thereof. The transmission mechanism 10 is disposed between an engine 8 and a pair of drive wheels 34. The engine 8 includes an internal combustion engine such as a gasoline engine or a diesel engine or the like and serves as a drive-power source. The engine 8 is directly connected to the input shaft 12 in series or indirectly through the pulsation absorbing damper (vibration damping device), not shown. This allows a vehicle drive force to be transferred from the engine 8 to the pair of drive wheels 34 in sequence through a differential gear device 32 (final speed reduction gear) (see Fig. 7) and a pair of drive axles

With the transmission mechanism 10 of the illustrated example, the engine 8 and the differential portion 11 are directly connected to each other. As used herein, the term "directly connected to each other" refers to a structure under which a direct connection is established between the associated component parts in the absence of a fluid-operated power transmitting device, such as a torque converter or a fluid coupling device or the like, and a connection including, for instance, the pulsation absorbing damper is involved in such a direction connection. It is noted that a lower half of the transmission mechanism 10, which is constructed symmetrically with respect to its axis, is omitted in Fig. 1. This is also true for the embodiment of the invention described below.

The differential portion 11 includes a first electric motor M1, a power distributing mechanism 16, constructed in a mechanical mechanism for mechanically distributing an output of the engine 8 applied to the input shaft 14, and a second electric motor M2 operatively connected to the power transmitting member 18 to be unitarily rotate therewith. The power distributing mechanism 16 functions as a differential mechanism through which the engine output is distributed to the first electric motor MI and the power transmitting member 18. In the illustrated embodiment, both the first and second electric motors M1 and M2 are so-called motor/generators each having a function to generate electric power. The first electric motor M1 has at least a function as an electric power generator for generating a reaction force. The second electric motor M2 has at least a function as a motor (electric motor) serving as a running drive power source to output a vehicle drive force.

The power distributing mechanism 16 includes, as a major component, a first planetary gear set 24 of a single pinion type having a gear ratio ρ1 of about 0.418, for example. The first planetary gear set 24 has rotary elements (elements) composed of a first sun gear S1, a first planetary gear P1, a first carrier CA1 supporting the first planetary gear PI to be rotatable about its axis and about the axis of the first sun gear S1, and a first ring gear RI meshing with the first sun gear S1 through the first planetary gear P1. Where the numbers of teeth of the first sun gear S1 and the first ring gear R1 are represented by ZS1 and ZR1, respectively, the above gear ratio ρ1 is represented by ZS1/ZR1.

In the power distributing mechanism 16, a first carrier CA1 is connected to the input shaft 14, i.e., the engine 8; a first sun gear S1 is connected to the first electric motor M1; and a first ring gear R1 is connected to the power transmitting member 18. With the power distributing mechanism 16 of such a structure, the three elements of the first planetary gear set 24, i.e., the first sun gear S1, the first carrier CA1 and the first ring gear R1 are arranged to rotate relative to each other for initiating a differential action, i.e., in a differential state under which the differential action is initiated. This allows the engine output to be distributed to the first electric motor M1 and the power transmitting mechanism 18. Then, a part of the distributed engine output drives the first electric motor M1 to generate electric energy, which is stored and used for rotatably driving the second electric motor M2.

Thus, the differential portion 11 (power distributing mechanism 16) is caused to function as an electric differential device such that, for instance, the differential portion 11 is placed in a so-called continuously variable shifting state (electrically established CVT state) to continuously vary the rotation of the power transmitting member 18, regardless of the engine 8 operating at a given rotational speed. That is, the differential portion 11 functions as an electrically controlled continuously variable transmission to provide a speed ratio γ0 (rotational speed N_{IN} of the input shaft 14/ rotational speed N₁₈ of the power transmitting member 18) that is continuously variable from a minimum value γ0min to a maximum value γ0max.

The automatic transmission portion 20 includes a single-pinion type second planetary gear set 26, a single-pinion type third planetary gear set 28 and a single-pinion type fourth planetary gear set 30. The automatic transmission portion 20 is a planetary gear type multiple-step transmission operable as a step-variable automatic transmission. The second planetary gear set 26 has a second sun gear S2; a second planetary gear P2; a second carrier CA2 supporting the second planetary gear P2 to be rotatable about its axis and about the axis of the second sun gear S2; and a second ring gear R2 meshing with the second sun gear S2 through the second planetary gear P2. For example, the second planetary gear set 26 has a given gear ratio p2 of about "0.562". The third planetary gear set 28 has a third sun gear S3; a third planetary gear P3; a third carrier CA3 supporting the third planetary gear P3 to be rotatable about its axis and about the axis of the third sun gear S3; and a third ring gear R3 meshing with the third sun gear S3 through the third planetary gear P3. For example, the third planetary gear set 28 has a given gear ratio p3 of about "0.425".

The fourth planetary gear set 30 has a fourth sun gear S4; a fourth Planetary gear P4; a fourth carrier CA4 supporting the fourth planetary gear P4 tn be rotatable about its axis and about the axis of the fourth sun gear S4; and a fourth ring gear R4 meshing with the fourth sun gear S4 through the fourth planetary gear P4. For example, the fourth planetary gear set 30 has a given gear ratio p4 of, for instance, about "0.421". With the second sun gear S2, second ring gear R2, third sun gear S3, third ring gear R3, fourth sun gear S4 and fourth ring gear R4 having the numbers of gear teeth represented by ZS2, ZR2, ZS3, ZR3, ZS4 and ZR4, respectively, the gear ratios p2, ρ3 and p4 are expressed by ZS2/ZR2, ZS3/ZR3, and ZS4/ZR4, respectively.

In the automatic transmission portion 20, the second and third sun gears S2, S3 are integrally connected to each other, selectively connected to the power transmitting member 18 through a second clutch C2, and selectively connected to the casing 12 through a first brake B1. The second carrier CA2 is selectively connected to the casing 12 through a second brake B2, and the fourth ring gear R4 is selectively connected to the casing 12 through a third brake B3. The second ring gear R2, third carrier CA3 and fourth carrier CA4 are integrally connected to each other and connected to the output shaft 22. The third ring gear R3 and the fourth sun gear S4 are integrally connected to each other and selectively connected to the power transmitting member 18 through a first clutch C1.

Thus, the automatic transmission portion 20 and the differential portion 11 (power transmitting member 18) are selectively connected to each other through the first clutch C1 or the second clutch C2, which is provided to establish each gear position (shift gear position) in the automatic transmission portion 20. In other words, the first and second clutches C1, C2 function as coupling devices i.e., engaging device operable to place the power transmitting path between the power transmitting member 18 and the automatic transmission portion 20, that is, the power transmitting path between the differential portion 11 (power transmitting member 18) and the drive wheels 34, selectively in one of a power transmitting state in which the vehicle drive force can be transmitted through the power transmitting path, and the power cut-off state in which the vehicle drive force cannot be transmitted through the power transmitting path.

That is, with at least one of the first and second clutches C1 and C2 brought into coupling engagement, the power transmitting path is placed in the power transmitting state. In contrast, uncoupling both the first and second clutches C1 and C2 places the power transmitting path in the power cut-off state.

With the automatic transmission portion 20, further, uncoupling an on-uncoupling side coupling device while coupling an on-coupling side coupling device allows a so-called "clutch-to-clutch" shifting action to be executed for respective gear positions to be selectively established. This allows a speed ratio γ (rotational speed N₁₈ of the power transmitting member 18/rotational speed N_{OUT} of the output shaft 22) to be obtained in equally varying ratio i.e., geometrically ratio for each gear position. As indicated in the coupling operation table shown in Fig. 2, coupling the first clutch C1 and third brake B3 establishes 1st-speed gear position having a speed ratio γl of approximately, for instance, "3.357". With the first clutch C1 and second brake B2 coupled in operation, a 2nd-speed gear position is established with a speed ratio γ2 of, for instance, approximately "2.180", which is lower a value of the speed ratio γ1

With the first clutch C1 and first brake B1 coupled in operation, a 3rd-speed gear position is established with a speed ratio γ3 of, for instance, approximately "1.424", which is lower a value of the speed ratio γ2. Coupling the first clutch C1 and second clutch C2 establishes a 4th-speed gear position with a speed ratio γ4 of, for instance, approximately "1.000", which is lower than the speed ratio γ3. Coupling the second clutch C2 and third brake B3 establishes a reverse-drive gear position (reverse-drive shift position) with a speed ratio γR of, for instance, approximately 3.209, which is intermediate between those of the 1st-speed gear position and the 2nd-speed gear position. In addition, uncoupling i.e., disengaging or releasing the first clutch C1, second clutch C2, first brake B1, second brake B2 and third brake B3 allows a neutral position N to be established.

The first clutch C1, second clutch C2, first brake B1, second brake B2 and third brake B3 (hereinafter collectively referred to as clutch C and brake B, unless otherwise specified) are hydraulically operated frictional coupling devices that are used in the related art vehicular automatic transmission. Each of these frictional coupling devices may include a wet-type multiple-disc clutch having a plurality of mutually overlapping friction plates adapted to be pressurized against each other by a hydraulic actuator, or a band brake including a rotary drum having an outer circumferential surface on which one band or two bands are wound with terminal ends being adapted to be tightened by a hydraulic actuator. Thus, the frictional coupling device serves to selectively provide a drive connection between two component parts between which each clutch or brake is interposed.

With the transmission mechanism 10 of such a structure, the differential portion 11 serving as the continuously variable transmission, and the automatic transmission portion 20 constitute a continuously variable transmission. Further, with the differential portion 11 controlled so as to provide a speed ratio kept at a fixed level, the differential portion 11 and the automatic transmission portion 20 can provide the same state as that of a step-variable transmission.

More particularly, the differential portion 11 functions as the continuously variable transmission, and the automatic transmission portion 20 connected to the differential portion. 11 in series functions as the step-variable transmission. Thus, the rotational speed input to the automatic transmission portion 20 for at least one gear position M (hereinafter referred to as "input rotational speed of the automatic transmission portion 20"), i.e., the rotational speed of the power transmitting member 18 (hereinafter referred to as "transmitting-member rotational speed N₁₈") are caused to continuously vary, thereby enabling the gear position M to have a continuously variable speed range. Accordingly, the transmission mechanism 10 provides an overall speed ratio γT (rotational speed N_{IN} of the input shaft 14/rotational speed N_{OUT} of the output shaft 22) in a continuously variable range. Thus, the continuously variable transmission is established in the transmission mechanism 10. The overall speed ratio γT of the transmission mechanism 10 is the total speed ratio γT of the whole automatic transmission portion 20 that is established based on the speed ratio γ0 of the differential portion 11 and the speed ratio γ of the automatic transmission portion 20.

For the respective gear positions such as, for instance, the 1st-speed to 4th-speed gear positions and the reverse-drive gear position of the automatic transmission portion 20 as indicated in the coupling operation table shown in Fig. 2, the transmitting-member rotational speed N₁₈ is continuously varied with each gear position being obtained in a continuously variable speed width. Accordingly, a continuously variable speed ratio is present between adjacent gear positions, enabling the whole transmission mechanism 10 to have the total speed ratio γT continuously.

Further, the speed ratio γ0 of the differential portion 11 is controlled so as to lay at a fixed level and the clutch C and brake B are selectively coupled, thereby causing either one of the 1st-speed to 4th-speed gear positions or the reverse-drive gear position (reverse-drive shift position) to be selectively established. Control of the differential portion 11 and engagement of the clutch C and the brake B are performed by an electronic control unit 80 to be explained later. This allows the overall speed ratio γT, variable in a nearly equal ratio, of the transmission mechanism 10 to be obtained for each gear position. Thus, the transmission mechanism 10 can be established in the same state as that of the step-variable transmission.

For instance, if the differential portion 11 is controlled so as to provide the speed ratio y0 at a fixed value of "1", the transmission mechanism 10 provides the total speed ratio γT for each gear position of the 1st-speed to 4th-speed gear positions and the reverse-drive gear position of the automatic transmission portion 20 as indicated by the coupling operation table shown in Fig. 2. Further, if the automatic transmission portion 20 is controlled under the 4th-speed gear position so as to cause the differential portion 11 to have the speed ratio γ0 of approximately, for instance, "0.7" less than a value of "1", the automatic transmission portion 20 has the total speed ratio γT of approximately, for instance, "0.7" that is less than a value of the 4th-speed gear position.

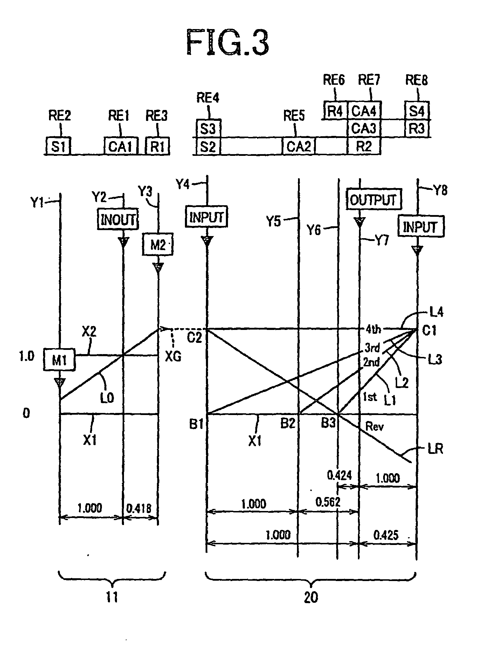

Fig. 3 is a collinear chart for the transmission mechanism 10 including the differential portion 11 and the automatic transmission portion 20, wherein the relative motion relationships among the rotational speeds of the various rotary elements in different coupling states for each gear position can be plotted on straight lines. The collinear chart of Fig. 3 takes the form of a two-dimensional coordinate system having the abscissa axis plotted with the gear ratios p of the planetary gear sets 24, 26, 28 and 30 and the ordinate axis plotted with the mutually relative rotating speeds of the rotary elements. A transverse line X1 indicates the rotational speed that is zeroed; a transverse line X2 the rotational speed of "1.0", that is, the rotating speed N_{E} of the engine 8 connected to the input shaft 14; and a transverse line XG the rotational speed of the power transmitting member 18.

Starting from the left, three vertical lines Y1, Y2 and Y3, associated with the three elements of the power distributing mechanism 16 forming the differential portion 11, represent the mutually relative rotating speeds of the first sun gear S1 corresponding to a second rotary element (second element) RE2, the first carrier CA1 corresponding to a first rotary element (first element) REI, and the first ring gear R1 corresponding to a third rotary element (third element) RE3, respectively. A distance between the adjacent vertical lines is determined based on the gear ratio pi of the first planetary gear set 24.

Further, starting from the left, five vertical lines Y4, Y5, Y6, Y7 and Y8 for the automatic transmission portion 20 represent the mutually relative rotating speeds of the second and third sun gears S2, S3, connected to each other, which corresponds to a fourth rotary element (fourth element) RE4; the second carrier CA2 corresponding to a fifth rotary element (fifth element) RE5; the fourth ring gear R4 corresponding to a sixth rotary element (sixth element) RE6; the second ring gear R2, third carriers CA3 and fourth carriers CA4, connected to each other, which correspond to a seventh rotary element (seventh element) RE7; and the third ring gear R3 and fourth sun gear S4 connected to each other and corresponding to an eighth rotary element (eighth element) RE8, respectively. Each distance between the adjacent vertical lines is determined based on the gear ratios ρ2, ρ3. and ρ4 of the second, third and fourth planetary gear sets 26, 28 and 30.

In the relationship among the vertical lines on the collinear chart, if a space between the sun gear and carrier is set to a distance corresponding to a value of " 1", then, a space between the carrier and ring gear lies at a distance corresponding to the gear ratio ρ of the planetary gear set. That is, for the differential portion 11, a space between the vertical lines Y1 and Y2 is set to a distance corresponding to a value of "1" and a space between the vertical lines Y2 and Y3 is set to a distance corresponding to the gear ratio ρ1. For the automatic transmission portion 20, further, the space between the sun gear and carrier is set to the distance corresponding to the value of "1" for each of the second, third and fourth planetary gear sets 26, 28 and 30, for which the space between the carrier and ring gear is set to the distance corresponding to the gear ratio p.

Referring to the collinear chart of Fig. 3, the power distributing mechanism 16 (differential portion 11) of the transmission mechanism 10 is arranged such that the first rotary element RE1 (first carrier CA1) of the first planetary gear set 24 is connected to the input shaft 14, i.e., the engine 8, and the second rotary element RE2 is connected to the first electric motor M1. The third rotary element RE3 (first ring gear R1) is connected to the power transmitting member 18 and the second electric motor M2. Thus, a rotary motion of the input shaft 14 is transmitted (input) to the automatic transmission portion 20 through the power transmitting member 18. A relationship between the rotational speeds of the first sun gear S1 and the first ring gear R1 is represented by an inclined straight line L0 which passes across a point of intersection between the lines Y2 and X2.

Now, description is made of a case in which, for example, the differential portion 11 is placed in a differential state with the first to third rotary elements RE I to RE3 enabled to rotate relative to each other, while the rotational speed of the first ring gear R1 indicated at an intersecting point between the straight line LO and the vertical line Y1 is bound with the vehicle speed V and remains at a nearly constant level. In this case, as the engine rotation speed N_{E} is controlled with the rotational speed of the first carrier CA1, as represented by an intersecting point between the straight line LO and the vertical line Y2, being raised or lowered, the rotational speed of the first sun gear S1, i.e., the rotational speed of the first electric motor M1, indicated by an intersecting point between the straight line LO and the vertical line Y1, is raised or lowered.

On controlling the rotational speed of the first electric motor M1 so as to allow the differential portion 11 to have the speed ratio γ0 of "1" with the first sun gear SI rotating at the same speed as the engine rotation speed N_{E}, the straight line L0 is aligned with the horizontal line X2. When this takes place, the first ring gear R1, i.e., the power transmitting member 18, is caused to rotate at the same speed as the engine rotation speed N_{E}. On the contrary, if the rotational speed of the first electric motor M1 is controlled so as to allow the differential portion 11 to have the speed ratio γ0 of a value less than "1", for instance, a value of approximately "0.7" with the rotational speed of the first suit gear S1 being zeroed, the power transmitting member 18 is caused to rotate at an increased transmitting-member rotational speed N₁₈ higher than the engine rotation speed N_{E}.

In the automatic transmission portion 20, the fourth rotary element RE4 is selectively connected to the power transmitting member 18 via the second clutch C2 and selectively connected to the casing 12 via the first brake B1, with the fifth rotary element RES being selectively connected to the casing 12 via the second brake B2. The sixth rotary element RE6 is selectively connected to the casing 12 via the third brake B3 with the seventh rotary element RE7 connected to the output shaft 22, and the eighth rotary element RE8 is selectively connected to the power transmitting member 18 via the first clutch C1.

Next, description is made of a case wherein in the automatic transmission portion 20, the differential portion 11 is placed in a state with the straight line L0 brought into coincidence with the horizontal line X2 to cause the differential portion 11 to transfer the vehicle drive force to the eighth rotary element RE8 at the same speed as the engine rotation speed N_{E} upon which the first clutch C1 and the third brake B3 are coupled as shown in Fig. 3. In this case, the rotational speed of the output shaft 22 for the 1st-speed gear position is represented by an intersecting point between the inclined line L1, passing across an intersecting point between the vertical line Y8, indicative of the rotational speed of the eighth rotary element RE8, and the horizontal line X2 and a point of intersection between the vertical line Y6, indicative of the rotational speed of the sixth rotary element RE6, and the horizontal line X1, and an intersecting point intersecting the vertical line Y7 indicative of the rotational speed of the seventh rotary element RE connected to the output shaft 22 as indicated in Fig. 3.

Similarly, the rotational speed of the output shaft 22 for the 2nd-speed gear position is represented by an intersecting point between an inclined straight line L2, determined when the first clutch C1 and second brake B2 are coupled, and the vertical line Y7 indicative of the rotational speed of the seventh rotary element RE7 connected to the output shaft 22. The rotational speed of the output shaft 22 for the 3rd-speed gear position is represented by an intersecting point between an inclined straight line L3, determined with the first clutch C1 and first brake B1 being coupled, and the vertical line Y7 indicative of the rotational speed of the seventh rotary element RE7 connected to the output shaft 22. The rotational speed of the output shaft 22 for the 4th-speed gear position is represented by an intersecting point between a horizontal straight line L4, determined with the first clutch C1 and second brake B2 being coupled, and the vertical line Y7 indicative of the rotational speed of the seventh rotary element RE7 connected to the output shaft 22.

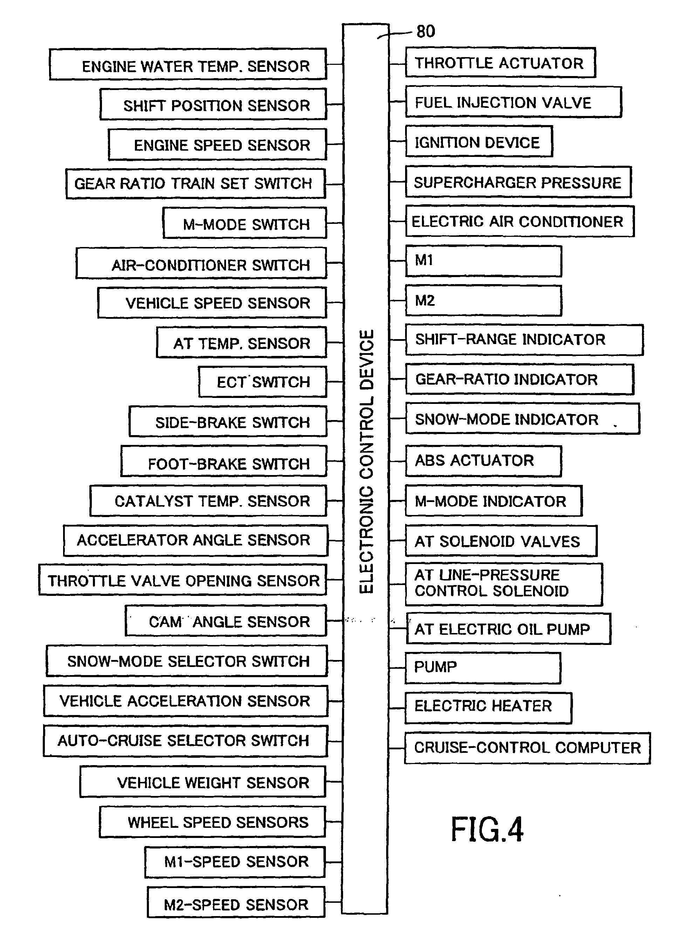

Fig. 4 shows an electronic control unit 80 operative to control the transmission mechanism 10 of the present example for generating various output signals in response to various input signals. The electronic control unit 80 includes a so-called microcomputer incorporating a CPU, a ROM, a RAM and an input/output interface, and is arranged to process the signals according to programs stored in the ROM while utilizing a temporary data storage function of the ROM, to implement hybrid drive controls of the engine 8 and first and second electric motors M1 and M2, and drive controls such as shifting controls of the automatic transmission portion 20.

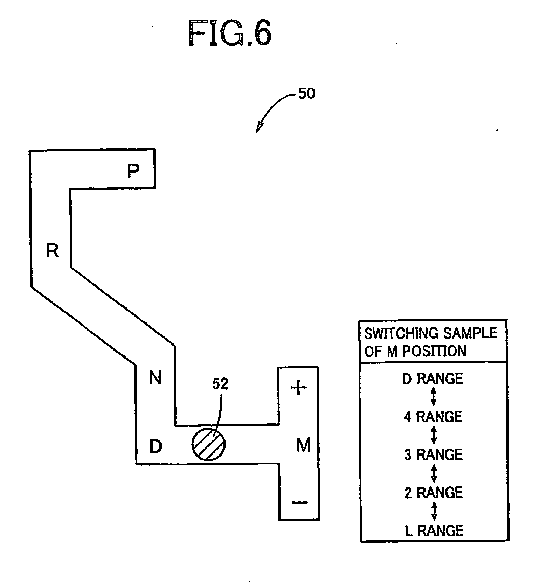

The electronic control unit 80, connected to various sensors and switches as shown in Fig. 4, receives various signals such as: a signal indicative of an engine coolant temperature TEMPw; a signal indicative of a shift position P_{SH} selected with a shift lever 52 (shown in Fig. 6) and a signal indicative of the number of operations initiated on the "M" position; a signal indicative of the engine rotation speed N_{E} representing the rotational speed of the engine 8; a signal indicative of a gear train preset value (drive-position group selector switch); a signal commanding an M mode (manual shift running mode); a signal indicative of an operated state of an air conditioner; a signal indicative of the rotational speed (hereinafter referred to as "output shaft speed") N_{OUT} of the output shaft 22; a signal indicative of a temperature TOIL of working oil of the automatic transmission portion 20 a signal indicative of a side brake under operation; and a signal indicative of a foot brake under operation.

The electronic control unit 80 also receives a signal indicative of a temperature of a catalyst; a signal indicative of an accelerator opening. Acc representing an operating stroke of an accelerator pedal when manipulated by a driver for his output demand value; a signal indicative of a throttle valve opening Θ_{TH} of an electronic throttle valve 62; a signal indicative of a cam angle; a signal indicative of a snow mode under setting; a signal indicative of a fore and aft acceleration value G of the vehicle; a signal indicative of an auto-cruising drive mode; a signal indicative of a vehicle weight; a signal indicative of a wheel velocity of each drive wheel; a signal indicative of a rotational speed N_{M1} of the first electric motor M1 (hereinafter referred to as "first-electric motor speed N_{M1} as required); a signal indicative of a rotational speed N_{M2} of the second electric motor M2 (hereinafter referred to as "second-electric motor speed N_{M2} as required); and a signal indicative of a charged capacity (charged state) of charge SOC stored in an electric-energy storage device 60 (see Fig. 7).

The electronic control unit 80 generates various signals including: a control signal applied to an engine output control device 58 (see Fig. 7) for controlling an engine output, i.e., a drive signal applied to a throttle actuator 64 for controlling a throttle valve opening θ_{TH} of an electronic throttle valve 62 disposed in an intake manifold 60 of the engine 8; a fuel supply quantity signal applied to a fuel injecting device 66 for controlling an amount of fuel injected into the intake manifold 60 or cylinders of the engine 8; an ignition signal applied to an ignition device 68 to control the ignition timing of the engine 8; a supercharger pressure regulation signal for regulating a supercharger pressure of the engine 8; an electric air-conditioner drive signal for actuating an electric air conditioner; command signals for commanding the operations of the first and second electric motors M1 and M2; a shift-position (manipulated position) display signal for actuating a shift-range indicator; a gear-ratio displaying signal for displaying the gear ratio.

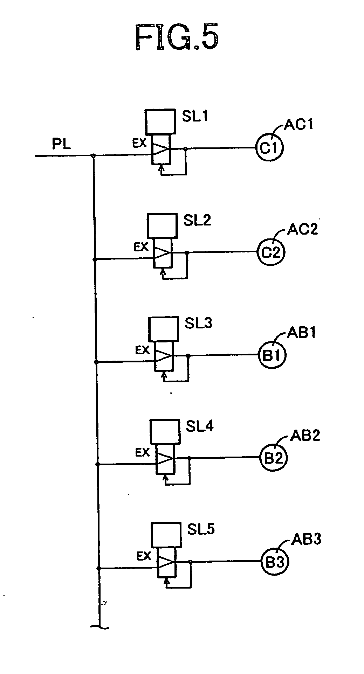

The electronic control unit 80 also generates snow-mode display signal for displaying the presence of a snow-mode; an ABS actuation signal for operating an ABS actuator to preclude slippages of the drive wheels during a braking phase; an M-mode display signal for displaying an M-mode being selected; valve command signals for actuating electromagnetic valves (linear solenoid valves), incorporated in the hydraulic control unit 70 (see Figs. 5 and 7) for controlling the hydraulic actuators of the hydraulically operated frictional coupling devices of the differential portion 11 and automatic transmission portion 20; a signal for regulating a regulator valve (pressure regulator valve), incorporated in the hydraulic control unit 70, to regulate a line pressure P_{L}; a drive command signal for actuating an electric hydraulic pump acting as a hydraulic original-pressure source for the line pressure P_{L} to be regulated; a signal for driving an electric heater; and a signal applied to a. cruise-control computer.

Fig. 5 is a circuit diagram related to linear solenoid valves SL1 to SL5 of the hydraulic control circuit 70 for controlling the operations of respective hydraulic actuators (hydraulic cylinders) AC1, AC2, AB1, AB2, AB3 of the clutches C1, C2 and brakes B1 to B3

As shown in Fig. 5, the hydraulic actuators AC1, AC2, AB1, AB2, AB3 are connected to the respective linear solenoid valves SL1-SL5, which are controlled in response to control commands, delivered from the electronic control unit 80. This adjusts the line pressure PL into respective clutch engaging pressures PC1, PC2, PB1, PB2 and PB3 to be applied directly to the respective hydraulic actuators AC1, AC2, AB1, AB2, AB3. The line pressure P_{L} represents an original hydraulic pressure, generated by an electrically operated hydraulic oil pump (not shown) or a mechanical oil pump driven by the engine 30, which is regulated by a relief-type pressure regulator valve depending on a load of the engine 8 in terms of an accelerator opening displacement Acc or a throttle valve opening Θ_{TH}.

The linear solenoid valves SL1 to SL5, fundamentally formed in the same structure, are independently energized or de-energized with the electronic control unit 80. This allows the hydraulic actuators AC1, AC2, AB 1, AB2, AB3 to independently and controllably regulate hydraulic pressures, thereby controlling the clutch engaging pressures PC1, PC2, PB1, PB2, PB3. With the automatic transmission portion 20, predetermined coupling devices are coupled in a pattern indicated on, for instance, the coupling-operation indicating table shown in Fig. 2, thereby establishing various gear positions. In addition, during the shifting control of the automatic transmission portion 20, a so-called clutch-to-clutch shifting is executed to simultaneously control the coupling or uncoupling of the clutches C and the brakes B relevant to the shifting operations.

Fig. 6 is a view showing one example of a manually operated shifting device 50 serving as a changeover device operative to shift multiple kinds of shift positions P_{SH} on manual operation. The shifting device 50 is mounted in, for instance, an area lateral to a driver's seat and includes a shift lever 52 to be manipulated for selecting one of the plurality of shift positions P_{SH}.

The shift lever 52 has a structure that can be manually selected to a parking position "P (Parking)", a reverse drive position "R (Reverse)", a neutral position "N (Neutral)", a forward-drive automatic-shift drive position "D (Drive)" or a forward-drive manual-shift position "M (Manual)" Among these, the "P" position represents a position in which an internal path of the transmission mechanism 10, i.e., the power transmitting path inside the automatic shifting portion 20 is shut off in a neutrality, i.e., in a neutral condition, with the output shaft 22 of the automatic shifting portion 20 remained in a locked state. The "R" position represents a position for a reverse-drive mode. The "N" position represents a position in which the power transmitting path of the transmission mechanism 10 is shut off in a neutral state.

The "D" position represents a position for an automatic shift mode to be established to perform an automatic shift control within a variable range of a shiftable total speed ratio γT of the transmission mechanism 10 obtained by various gear positions that are subjected to the automatic shift control within an infinitely variable speed ratio of the differential portion 11 and a range selected from the 1st-speed to the 4th-speed gear positions of the automatic shifting portion 20. The "M" position represents a position for a manual-shift forward-drive mode (manual mode) to be established for a so-called shift range that limits a shifting gear position on a high-speed gear range during the operation of the automatic shifting portion 20 under the automatic shift control.

As the shift lever 52 is shifted to each of the various shift positions P_{SH}, the hydraulic control circuit 70 is electrically switched, thereby obtaining the reverse-drive "R" gear position, the neutral position "N" and the various gear shift positions or the like in the forward-drive gear position "D", shown in Fig. 2.

Among the various shift positions P_{SH} represented in the "P" to "M" positions, the "P" and "N" positions represent non-running positions selected when no vehicle is caused to run. That is, the "P" and "N" positions represent non-drive positions selected when the first and second clutches C1 and C2 select to cause the power transmitting path to be switched to a power cut-off state like a situation where as indicated in, for instance, the coupling operation indicating table shown in Fig. 2, both the first and second clutches C1 and C2 are uncoupled to interrupt the power transmitting path inside the automatic transmission portion 20 so as to disenable the driving of the vehicle.

The "R", "D" and "M" positions represent running positions selected when the vehicle is caused to run. That is, these positions represent drive positions selected when the first clutch C1 and/or second clutch C2 select to cause the power transmitting path to be switched to a power transmitting state like a situation where as indicated in, for instance, the coupling operation indicating table shown in Fig. 2, at least one of the first and second clutches C1 and C2 is coupled to establish the power transmitting path inside the automatic transmission portion 20 so as to enable the vehicle to be driven.

More particularly, as the shift lever 52 is manually shifted from the "P" position or the "N" position to the "R" position, the second clutch C2 is coupled to cause the power transmitting path of the automatic transmission portion 20 to be switched from the power cut-off state to the power transmitting state. With the shift lever 52 manually shifted from the "N" position to the "D" position, at least the first clutch C1 is coupled to switch the power transmitting path of the automatic transmission portion 20 from the power cut-off state to the power transmitting state.

Further, as the shift lever 52 is manually shifted from the "R" position to the "P" or "N" position; the second clutch C2 is uncoupled to switch the power transmitting path of the automatic transmission portion 20 from the power transmitting state to the power cut-off state. With the shift lever 52 manually shifted from the "D" position to the "N" position, the first clutch C1 or second clutch C2 is uncoupled to switch the power transmitting path of the automatic transmission portion 20 from the power transmitting state to the power cut-off state.

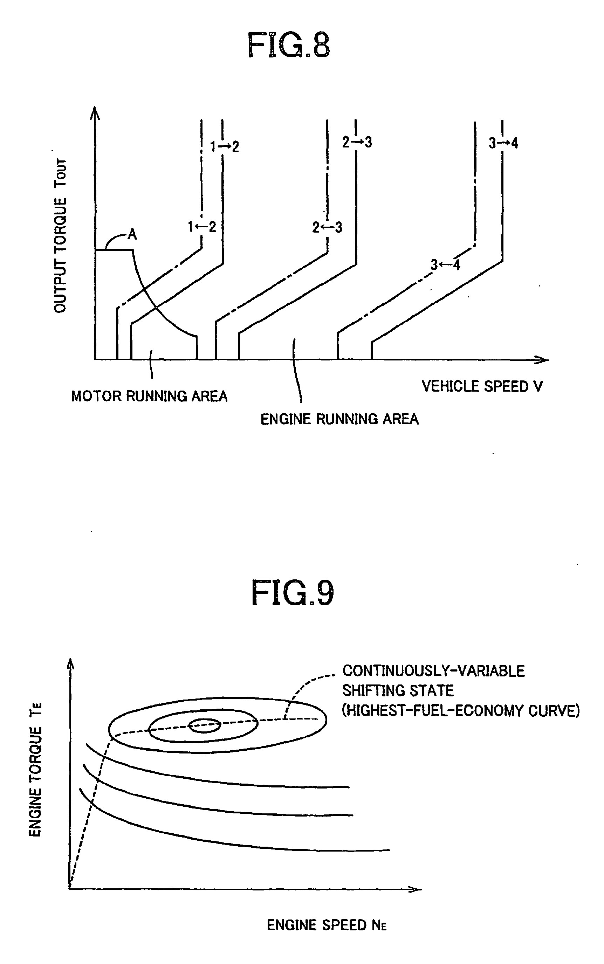

Fig. 7 is a functional block diagram illustrating major control functions to be-executed by the electronic control device 80. The electronic control device 80 controls step-variable shift control means 82, hybrid control means 84, shift position determining means 88, rotation speed determining means 90 and engine upper limit rotation speed setting means. In particular, the step-variable shift control means 82 determines whether to execute a shifting, i.e., determines a gear position to be shifted in the automatic shifting portion 20 based on a vehicle condition, represented by an actual vehicle speed V and demanded output torque Tour of the automatic shifting portion 20 by referring to the relationship (shifting lines and shifting map) shown in Fig. 8. The step-variable shift control means 82 executes the automatic shift control of the automatic shifting portion 20 so as to obtain the gear position that has been determined. The relationship, shown in Fig. 8, has upshift lines (in solid lines) and downshift lines (in single dot lines) that are preliminarily stored in terms of parameters such as the vehicle speed V and output torque T_{OUT} of the automatic shifting portion 20.

When this takes place, the step-variable shifting control means 82 outputs commands (a shift output command, a hydraulic pressure command) to the hydraulic control circuit 70 for coupling and/or uncoupling the hydraulically operated frictional coupling devices, involved in the shifting of the automatic transmission portion 20 so as to establish the gear position in accordance with the coupling table shown in Fig. 2. That is, the step-variable shifting-control means. 82 outputs a command to the hydraulic control circuit 70 for uncoupling the on-uncoupling side coupling device, involved in the shifting, while coupling the on-coupling side coupling device to cause the clutch-to-clutch shifting to be executed. Upon receipt of such commands, the hydraulic control circuit 70 causes the linear solenoid valves SL, thereof to be actuated. This allows the hydraulically operated actuators of the hydraulically operated frictional coupling devices, involved in the relevant shifting, to be actuated. Thus, for instance, the on-uncoupling side coupling device is uncoupled and the on-coupling side coupling device is coupled, causing the automatic transmission portion 20 to execute the shifting.

Hybrid control means 84 operates the engine 8 in an optimum operating range at a high efficiency while varying distribution of the drive forces of the engine 8 and the second electric motor M2 at optimum rates and optimally varying a reacting force of the first electric motor M1 during the operation thereof, thereby controllably operating the differential portion 11 under an electrically controlled continuously variable transmission to control a speed ratio γ0. At a vehicle speed V during the running of the vehicle in one occasion, for instance, a target (demanded) output for the vehicle is calculated based on the accelerator opening Acc and the vehicle speed V both of which represent output demanded variables of the driver, after which a demanded total target output is calculated based on the target output of the vehicle and a battery charge demanded value.

Subsequently, a target engine output is calculated in consideration of a loss in power transmission, loads of auxiliary units, assist torque of the second electric motor M2 or the like so as to obtain the total target output. Then, the hybrid control means 84 controls the engine 8, while controlling a rate of electric power being generated by the first electric motor M1, so as to obtain the engine rotation speed N_{E} and engine torque T_{E} such that the target engine output is obtained.

The hybrid control means 84 executes such controls in consideration of, for instance, the gear position of the automatic transmission portion 20 with a view to increasing a dynamic performance and improving fuel consumption. During such hybrid controls, the differential portion 11 is caused to operate as the electrically controlled continuously variable transmission such that the engine rotation speed NE and the vehicle speed V, determined for the engine 8 to operate in the operating range at a high efficiency, match the vehicle speed and the rotational speed of the power transmitting member 18 determined with the gear position in the automatic transmission portion 20.

That is, the hybrid control means 84 determines a target value of the total speed ratio γT of the transmission mechanism 10 such that the engine 8 is caused to operate along an optimal fuel efficiency curve (a fuel efficiency map and the relationships) of the engine 8 as indicated by a dotted line in Fig. 9 which is preliminarily and experimentally obtained and prestored. This achieves a compromise between driveability and fuel consumption during the running of the vehicle under a continuously variable shifting mode on a two-dimensional coordinate established with the engine rotation speed N_{E} and output torque (engine torque) T_{E} of the engine 8. For instance, the target value of the total speed ratio γT of the transmission mechanism 10 is determined so as to obtain engine torque T_{E} and the engine rotation speed N_{E} for generating the engine output demanded for satisfying target outputs (a total target output and demanded drive torque).

When this takes place, the hybrid control means 84 allows electric-energy; generated by the first electric motor M1, to be supplied through an inverter 54 to a battery device 56 and the second electric motor M2. Thus, a major part of drive power of the engine 8 is mechanically transferred to the power transmitting member 18. Equipment, involved in the operations starting from the step of generating electric power to the step of causing the second electric motor M2 to consume resultant electric energy, establishes an electric path in which the part of the drive power of the engine 8 is converted into electric energy and resultant electric energy is converted into mechanical energy.

The hybrid control means 84 allows the differential portion 11 to perform an electrically controlled CVT function for controlling, for instance, a first-electric-motor rotational speed N_{M1} to maintain the engine rotation speed N_{E} at a nearly constant level or to control the rotational speed at an arbitrary level, regardless of the vehicle remaining under a halted condition or a running condition.

In other words, the hybrid control means 84 controls the first-electric-motor rotational speed N_{M1} at an arbitrary level while maintaining the engine rotation speed NE at the nearly constant level or the arbitrary rotational speed.

As will be apparent from the collinear chart shown in Fig. 3, for instance, when raising the engine rotation speed N_{E} during the running of the vehicle, the hybrid control means 84 raises the first-electric-motor rotational speed N_{M1} while maintaining a second-electric-motor rotational speed N_{M2} at a nearly fixed level that is bound with the vehicle speed. V (represented by the drive wheels 34). In addition, when maintaining the engine rotation speed N_{E} at the nearly fixed level during the shifting of the automatic transmission portion 20, the hybrid control means 84 varies the first-electric-motor rotational speed N_{M1} in a direction opposite to that in which the second-electric-motor rotational speed N_{M2} varies with the shifting of the automatic transmission portion 20 while maintaining the engine rotation speed N_{E} at the nearly fixed level.

Further, the hybrid control means 84 is operative to cause the differential portion 11 to perform the electrically controlled CVT function (differential action) to achieve the motor drive mode regardless of the engine 8 remaining under the halted condition or an idling state.

For instance, the hybrid control means 84 determines whether the vehicle remains in the motor-drive running region or the engine-drive running region based on the vehicle condition, represented by the actual vehicle speed V and the accelerator opening Acc, by referring to the relationship (drive-power-source switching lines and drive-power-source map) shown in Fig. 8. Thus, the hybrid control means 84 executes either a motor-drive running mode or an engine-drive running mode.

The relationship, shown in Fig. 8, has boundary lines, prestored as parameters involving the vehicle speed V and the output torque T_{OUT} of the automatic shifting, portion 20, between the motor-drive running region and the engine-drive running region for switching a running drive-power source between the engine 8 and the second electric motor M2. The drive-power-source map A, shown by a solid line in Fig. 8, is prestored together with a shifting map represented by, for instance, solid lines and single dot lines.

As will be apparent from Fig. 8, the hybrid control means 84 executes the motor-drive running mode in a relatively low output torque range Tour, regarded to be generally lower in engine efficiency than that of the engine operating in a high output torque area i.e., a low engine torque Te area, or a relatively low vehicle speed area of the vehicle speed V, i.e., a low load area.

In order to suppress a drag of the engine 8 being halted for improving fuel consumption during such a motor-drive running mode, the hybrid control means 84 controls the first-electric-motor rotational speed N_{M1} in a negative rotational speed. Thus, the first electric motor M1 is placed under an unloaded condition, thereby being idly rotated. By so doing, the engine rotation speed N_{E} is zeroed or nearly zeroed depending on needs by the electrically controlled CVT function (differential action) of the differential portion 11.

Even if the engine-drive running region is present, the hybrid control means 84 allows the first electric motor M1 and/or the battery device 56 to supply electric energy to the second electric motor M2 using the electrical path mentioned above. This drives the second electric motor M2 to apply torque to the drive wheels 34, making it possible to provide a so-called torque-assist for assisting drive power of the engine 8.

The hybrid control means 84 renders the first electric motor M1 operative under the unloaded condition to freely rotate i.e., idly rotated. This makes it possible to cause the differential portion 11 to interrupt a torque transfer; i.e., the differential portion 11 is rendered inoperative with no output being provided under the same state as that in which the power transmitting path is disconnected in the differential portion 11. That is, the hybrid control means 84 places the first electric motor M1 in the unloaded condition, making it possible to place the differential portion 11 in a neutral condition (neutral state) in which the power transmitting path is electrically disconnected.

The hybrid control means 84 functionally includes engine output control means for executing output control of the engine 8 so as to cause the same to generate a demanded engine output. That is, the hybrid control means 84 outputs a command to the engine output control device 58 to cause a throttle actuator 64 to controllably open or close an electronic throttle valve 62 for executing throttle control. Besides such an operation, the hybrid control means 84 outputs other commands to the engine output control device 58 so as to cause a fuel injection device 66 to control a fuel injection quantity and fuel injection timing for fuel injection control to be performed while causing an ignition device 68, such as an igniter or the like, to control an ignition timing for ignition timing control to be executed. These commands are output in single modes or in combination.

The engine output control device 58 operates in response to the commands delivered from the hybrid control means 84 to cause the throttle actuator 64 to controllably open or close the electronic throttle valve 62 for executing throttle control. Besides such a control, the engine output control device 58 causes the fuel injection device 66 to control the fuel injection quantity and fuel injection timing for fuel injection control to be performed while causing the ignition device 68, such as the igniter or the like, to control the ignition timing for ignition timing control. Thus, the engine output control is executed.

The hybrid control means 84 includes engine rotation speed limiting means 86 that limits an engine rotation speed N_{E} to a level that does not exceed a predetermined engine upper limit rotation speed. N_{ELIM} which is an upper limit rotation speed of the engine 8. The engine rotation speed limiting means 86 causes the fuel injection device 66 to interrupt (or minimize) the supply of fuel, i.e., by executing a fuel cut-off, which is well known as an effect of avoiding, for instance, an overspeed revolution (excessive rotation) of the engine 8. This limits the engine rotation speed N_{E} in a way not to exceed the predetermined engine upper limit i.e., upper allowable rotation speed N_{ELIM}. In an alternative, the engine rotation speed limiting means 86 causes the throttle actuator 64 to limit a throttle-valve opening θ_{TH} of the electronic throttle valve 62 upon, for instance, setting an upper limit of the throttle-valve opening θ_{TH}, thereby limiting the engine rotation speed N_{E} in a way not to exceed the engine upper limit rotation speed N_{ELIM}.

The engine upper limit rotation speed N_{ELIM} represents an allowable engine rotation speed, preliminarily obtained and determined on experiments in consideration of durability or the like of the engine 8, which is regularly used in an engine rotation speed region that does not exceed a maximal allowable rotation speed. In another point of view, the engine upper limit rotation speed N_{ELIM} is also regarded to be a high speed rotation limiting rotation speed on a predetermined engine rotation speed for the engine rotation speed limiting means 86 to limit the engine rotation speed N_{E} to protect the engine 8. Moreover, under a situation where an overspeed rotation i.e., excessive rotation preventive control is executed by a fuel cut-off operation to limit the engine rotation speed N_{E}, the engine upper limit rotation speed N_{ELIM} is also regarded to be a fuel cut-off rotation speed.

Meanwhile, the transmission mechanism 10 has a fear of the second electric motor rotation speed N_{M2} unnecessarily increasing in excess to fall in, for instance, the given high speed rotation state with a resultant drop in durability of the second electric motor M2. During the running of the vehicle in the engine running mode under, for instance, the power-on state, there is a likelihood that a rapid drop occurs in load of the transmission mechanism 10 (particularly the second electric motor M2) due to some reasons. These occur when the shift lever 52 is manipulated in a "D"→"N" shift to cause the automatic shifting portion 20 to be placed in a neutral state under which a failure occurs in the automatic shifting Portion 20 with a drop occurring, in the clutch engaging pressure for the clutch C and brake B to be engaged, and when the drive wheels 34 encounter slippages.

Then, due to the presence of the power-on state, the engine rotation speed N_{E} increases with an increase in the second electric motor rotation speed N_{M2}, which is consequently caused to fall in a high speed rotation state. This results in a fear of a drop occurring in durability of the second electric motor M2. As used herein, the term "given high speed ration state of the second electric motor rotation speed N_{M2}" refers to a rotation state in which the second electric, motor rotation speed N_{M2} increases to a high rotation speed to the extent exceeding an second electric motor allowable rotation speed N_{M2LIM} The second electric motor allowable rotation speed N_{M2LIM} of the second electric motor M2 represents an upper limit rotation speed of the second electric motor M2, preliminarily obtained and determined on experiments in consideration of durability or the like, which is regularly used in a second electric motor allowable rotation speed region that does not exceed a maximum allowable rotation speed.

In the illustrated example, therefore, the engine upper limit rotation speed N_{ELIM} is altered in accordance with the second electric motor rotation speed N_{M2}. Altering the engine upper limit rotation speed N_{ELIM}, usually preset for the engine 8 to be protected, limits an increase in the second electric motor rotation speed N_{M2} in a way to preclude the same from falling in the given high speed rotation state. This is based on a perspective in that the engine upper limit rotation speed N_{ELIM} specifies an upper limit rotation speed (second electric motor increasing possible rotation speed) N_{M2max} for the second electric motor rotation speed N_{M2} to be enabled to increase.

In doing so, instead of detecting the increase of the second electric motor rotation speed N_{M2} and subsequently limiting (inhibiting or suppressing) the increase thereof, the engine upper limit rotation speed N_{ELIM} can be preliminarily altered depending on the second electric motor rotation speed N_{M2}. As a result, even if the load of the second electric motor M2 drops under the power-on state to cause an increase in the second electric motor rotation speed N_{M2}, the second electric motor rotation speed N_{M2} can be automatically ensured to cease increasing at the second electric motor increasing possible rotation speed N_{M2max}, which is increasing possible rotation speed of the second electrical motor M2, lower than the second electric motor rotation speed N_{M2LIM}. thereby permitting the second electric motor M2 to have improving durability.

More particularly, the shift position determining means 88 determines the current position of the shift lever 52 based on a signal representing the shift position P_{SH} of the shift lever 52 to discriminate whether the current position of the shift lever 52 remains in the "D" position or the "M" position. That is, under a situation where a drop occurs in load of the transmission mechanism 10 (especially, the second electric motor M2), the shift position determining means 88 determines whether or not the second electric motor rotation speed N_{M2} lies in the forward-drive running position under a running state with a probability of an increase occurring in the engine rotation speed N_{E} to the extent, involved in the given high speed rotation state.

When the shift position determining means 88 determines that the position of the shift lever 52 lies in the forward-drive running position, the rotation speed determining means 90 determines whether or not the second electric motor rotation speed N_{M2} exceeds a first given rotation speed. As used herein, the term "first given rotation speed" refers to a determining value, representing a rotation speed lower than the second electric motor allowable rotation speed N_{M2LIM}, which is preliminarily obtained and determined on experiments for discriminating whether to alter the engine upper limit rotation speed N_{ELIM} for preventing the increase of the second electric motor rotation speed N_{M2} in the presence of the drop in load of the second electric motor M2. For instance, if the second electric motor allowable rotation speed N_{M2LIM} lies in a value around 12000 rpm, then, the first given rotation speed is set to a value of approximately 10000 rpm.

Under a circumstance where the rotation speed determining means 90 determines that the second motor rotation speed N_{M2} does not still exceed the first given rotation speed, the engine upper limit rotation speed setting means 92 sets the first given rotation speed to be an upper limit of the engine rotation speed N_{E}. That is, no operation is executed to alter the engine upper limit rotation speed N_{ELIM} usually preset for the engine 8 to be protected.

Meanwhile, under a circumstance where the rotation speed determining means 90 determines that the second motor rotation speed N_{M2} exceeds the first given rotation speed, the engine upper limit rotation speed setting means 92 sets (alters) the engine upper limit rotation speed N_{ELIM}. That is, the engine upper limit rotation speed N_{ELIM} is altered, to be the upper limit of the engine rotation speed N_{E}, to a lower rotation speed than that determined for a case in which the upper value of the engine rotation speed N_{E} is not determined to exceed the first given rotation speed. For instance, if the usual engine upper limit rotation speed N_{ELIM} lies in a value of approximately 5600 rpm, then, the engine upper limit rotation speed N_{ELIM} is altered to a value of approximately 4800 rpm.

In an alternative, instead of altering the engine upper limit rotation speed N_{ELIM} in terms of a point as to whether or not the second electric motor rotation speed N_{M2} exceeds the first given rotation speed, the usual engine upper limit rotation speed N_{ELIM} may be altered (lowered) depending on the second electric motor rotation speed N_{M2} during a phase in which the second electric motor rotation speed N_{M2} remains in a given region. As used herein, the term "given region" refers to a rotation speed in which the second electric motor rotation speed N_{M2} is lower than the second electric motor rotation speed. N_{M2} but falls in a high speed rotation state.

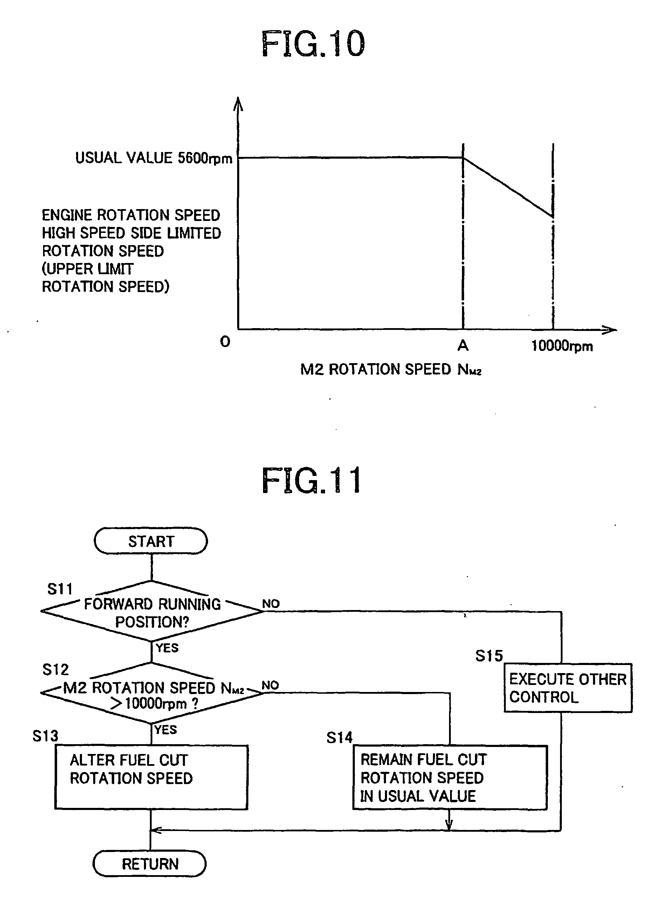

Fig. 10 is a view showing the relationship (of an engine upper..limit rotation speed map) that is preliminarily obtained and stored on experiments in terms of the second electric motor rotation speed N_{M2} and the engine upper limit rotation speed N_{ELIM} Fig. 10 takes a perspective that the higher the upper limit of the second electric motor rotation speed N_{M2}, the easier will be the second electric motor rotation speed N_{M2} to fall in the given high speed rotation state when the drop occurs in load of the second electric motor M2. On that basis, the engine upper limit rotation speed N_{ELIM} is determined such that the higher the second electric motor rotation speed N_{M2} during the phase in which the second electric motor rotation speed N_{M2} lies in the high speed rotation range exceeding a given value A, the lower will be the engine upper limit rotation speed N_{ELIM}. The engine upper limit rotation speed setting means 92 sets the engine upper limit rotation speed N_{ELIM} based on an actual second electric motor rotation speed N_{M2} by referring to, for instance, the engine upper limit rotation speed map shown in Fig. 10.

In the foregoing, the present example has been described in detail with reference to a feature in which the engine upper limit rotation speed N_{ELIM} is altered depending on the second electric motor rotation speed N_{M2}. Such an alteration can be regarded to be an expedient to limit (interrupt or suppress) an increase of the engine rotation speed N_{E} during a phase in which the second electric motor rotation speed N_{M2} exceeds the first given rotation speed or lies in a region around the high rotation speed.

Fig. 11 is a flowchart illustrating a basic sequence of major control operations to be executed by the electronic control device 80, i.e., a basic sequence of control operations for suppressing an unwanted increase in rotation speed of the second electric motor M2 to allow the same to have increased durability. This sequence is repeatedly executed on an extremely short period of time of the order of approximately, for instance, several milliseconds to several tens milliseconds.

In Fig. 11, first, in step (which is hereinafter omitted) S11 corresponding to the shift position determining means 88, a current position of the shift lever 52 is determined based on a signal representing the shift position P_{SH} of the shift lever 52. In particular, the determination is made whether or not the shift lever 52 is placed in the forward-drive running position such as, for instance, "D" position or "M" position.

If the determination in S11 is made negative, then, in S12, the other control than that related to the operation to limit the engine rotation speed N_{E} is executed or the current routine is terminated intact.

In contrast, if the determination in S11 is made positive, then, in S12. corresponding to the rotation speed determining means 90, the determination is made whether or not the second electric motor rotation speed N_{M2} exceeds the first given rotation speed of, for instance, 10000 rpm.

If the determination in S12 is made negative, then, in S14 corresponding to the engine upper limit rotation speed setting means 92, the usual engine upper limit rotation speed N_{ELIM}, determined for the engine 8 to be protected, is not altered and determined intact to be an upper limit of the engine rotation speed N_{E}. For the fuel cut-off rotation speed controlled to shut off the supply of fuel to the engine 8 for preventing the same from overspeeding, for instance, the usual engine upper limit rotation speed N_{ELIM} is caused to remain unchanged.

On the contrary, if the determination in S12 is made positive, then, in S13 corresponding to the engine upper limit rotation speed setting means 92, the engine upper limit rotation speed N_{ELIM} is altered to be the upper limit value of the engine rotation speed N_{E} at a value lower than the rotation speed determined in S14. For instance, the fuel cut-off rotation speed is altered from the value of approximately 5600 rpm to a value of approximately 4800 rpm. In addition, instead of altering the fuel cut-off rotation speed, the upper limit of the throttle valve opening θ_{TH} on the opening side thereof, corresponding to the engine upper limit rotation speed N_{ELIM}. may be determined to be an upper limit of the engine rotation speed N_{E}. Moreover, not only the engine upper limit rotation speed N_{ELIM} is determined in terms of a single point but also the engine upper limit rotation speed N_{ELIM} may be determined upon referring to, for instance, the engine upper limit rotation speed map shown in Fig. 10.

With the engine upper limit rotation speed N_{ELIM} newly determined again in S13, there is likelihood of the load being released from the second electric motor M2 or decreases with a resultant increase in the second electric motor rotation speed N_{M2} due to some reason during the running of the vehicle in the engine running mode under the power-on state. In this case, the resulting engine upper limit rotation speed N_{ELIM} automatically limits the increase of the second electric motor rotation speed N_{M2}. That is, the second electric motor rotation speed N_{M2} is ceased increasing at the second motor increasing possible rotation speed N_{M2max} on a stage in which the engine rotation speed N_{E} is stick to the engine upper limit rotation speed N_{ELIM}. Such a mode has an advantage in that the increase of the second electric motor rotation speed N_{M2} is detected to shift to a subsequent operation, the second motor increasing possible rotation speed N_{M2MAX} can be automatically ensured.

In the illustrated example, as set forth above, the engine rotation speed N_{E} is limited not to exceed the engine upper limit rotation speed N_{ELI}M, which is altered depending on the second electric motor rotation speed N_{M2}. This makes it possible to alter the second motor increasing possible rotation speed N_{M2maX,} influenced by the engine upper limit rotation speed N_{ELIM}, depending on the current second electric motor rotation speed N_{M2}. For instance, if the second electric motor rotation speed N_{M2} lies at a relatively high level, then, the engine upper limit rotation speed N_{ELIM} is lowered, making it possible to alter the second motor increasing possible rotation speed N_{M2max} to a lower level. As a result, the second electric motor M2 is suppressed from increasing in rotation, providing improved durability.

From another point of view, the engine upper limit rotation speed N_{ELIM} can be preliminarily altered depending on the second electric motor rotation speed N_{M2} so as to suppress the second electric motor M2 from increasing in rotation speed. Even if the second electric motor rotation speed N_{M2} increases due to some reason such as a rapid drop in load of the second electric motor M2 during the running of the vehicle in the engine running mode under the power-on state, the second electric motor rotation speed N_{M2} can be ensured to be less than the second motor increasing possible rotation speed N_{M2max}. As a result, the second electric motor M2 can have improved durability.

In the illustrated example, when the second electric motor rotation speed N_{M2} exceeds the first given rotation speed, the engine upper limit rotation speed N_{ELIM} is set to the lower rotation speed than that determined when no second electric motor rotation speed N_{M2} exceeds the first given rotation speed. Therefore, when the second electric motor rotation speed N_{M2} exceeds the first given rotation speed, the engine rotation speed N_{E} is limited to the lower rotation speed than that determined when no second electric motor rotation speed N_{M2} exceeds the first given rotation speed. This lowers the upper limit of the engine rotation speed N_{E} while lowering the second motor increasing possible rotation speed N_{M2max} causing the second electric motor M2 to be prevented from increasing in rotation speed.

In the illustrated example, when the second electric motor rotation speed N_{M2} exceeds the first given rotation speed, the engine rotation speed N_{E} is limited, thereby limiting the second electric motor rotation speed N_{M2} that is influenced by the engine rotation speed N_{E}. This results in the suppression of the increase in rotation speed of the second electric motor M2, which can have improved durability.

In the illustrated example, the limitation of the engine rotation speed N_{E} is executed by performing the fuel cur-off in a way not to exceed the engine upper limit rotation speed N_{ELIM}. This properly limits the engine rotation speed N_{E}, thereby suppresses the increase in rotation speed of the second electric motor M2.

In the illustrated example, the limitation of the engine rotation speed N_{E} is executed upon setting the upper limit of the throttle valve opening Θ_{TH} on the opening side thereof such that no engine rotation speed N_{E} exceeds the engine upper limit rotation speed N_{ELIM}. As a result, the engine rotation speed N_{E} can be properly limited, thereby preventing the rotation of the second electric motor M2 from increasing.
In the following description, component parts used in common to various examples or embodiments bear like reference numerals to omit redundant description.

In the first illustrated example set forth above, when the second electric motor rotation speed N_{M2} exceeds the first given rotation speed, the engine upper limit rotation speed N_{ELIM} is preliminarily set to the lower rotation speed than the usual rotation speed without detecting the rise in the second electric motor rotation speed N_{M2} This automatically ensures that, for instance, the second electric motor rotation speed N_{M2}, rising due to the rapid drop in load of the second electric motor M2, ceases increasing at the second motor increasing possible rotation speed N_{M2max} at the value lower than the second electric motor allowable rotation speed N_{M2LIM}. As used herein, the term "second electric motor allowable rotation speed N_{M2LIM}" refers to the rotation speed in which the second electric motor rotation speed N_{M2} falls in the given high speed rotation state.

On the contrary, in a second illustrated example, when it is predicted that the second electric motor rotation speed N_{M2} exceeds the first given rotation speed, the engine upper limit rotation speed N_{ELIM} is set to the lower rotation speed than the usual rotation speed, thereby obtaining the same advantageous effect as that of the first illustrated example.

The second illustrated example mainly differs from the first illustrated example in that the rise in the second electric motor rotation speed N_{M2} is actually detected. Therefore, there occurs delay in contrast to a case wherein the engine upper limit rotation speed N_{ELIM} is preliminarily set without detecting the second electric motor rotation speed N_{M2}. To compensate such a delay, no operation is executed to detect the presence of the second electric motor rotation speed N_{M2} actually falling in the given high speed rotation state but an operation is executed to predict the presence of the given high speed rotation state.

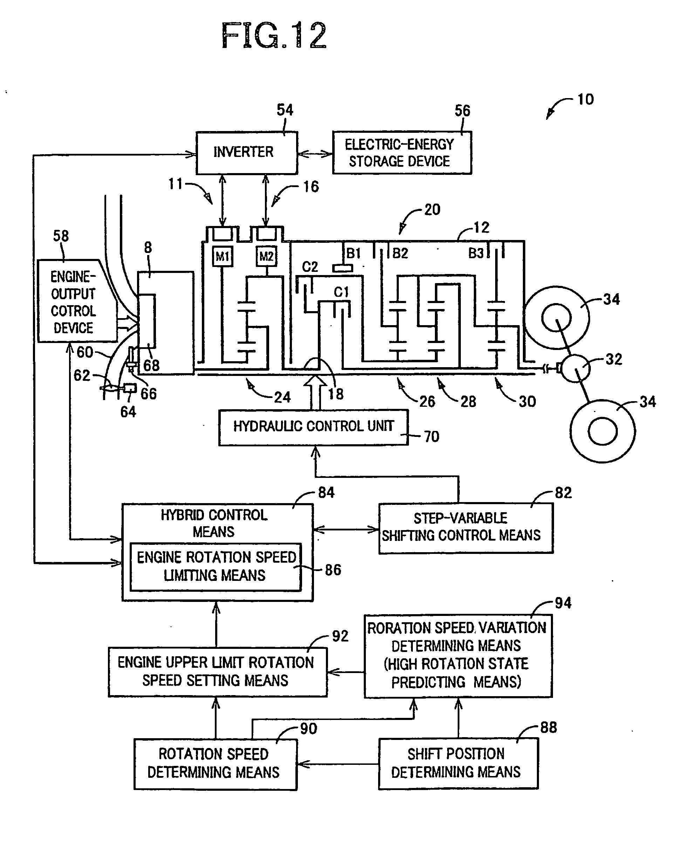

That is, in Fig. 12 representing a functional block diagram for illustrating a basic sequence of major control functions to be executed by the electronic control device 80, the present example mainly differs from that shown in Fig. 7 in that the transmission mechanism 10 includes rotation speed variation determining means 94 predicting the presence of the second electric motor rotation speed N_{M2} falling in the given high speed rotation state.

More particularly, the rotation speed determining means 90 executes the operation, in addition to the function described above, to determine whether or not the second electric motor rotation speed N_{M2} exceeds a second given rotation speed under a situation where the shift position determining means 88 determines that the shift lever 52 is placed in the forward-drive running position. As used herein, the term "second given rotation speed" refers to a condition value, lower than the first given rotation speed, which is preliminarily obtained and determined on experiments for predicting the presence of the rising of the second electric motor rotation speed N_{M2} falling in the given high speed rotation state. For instance, with the first given rotation speed prevailing at a value of approximately 10000 rpm, the second given rotation speed is set to a value of approximately 8000 rpm. That is, if the second electric motor rotation speed N_{M2} exceeds the first given rotation speed, the engine upper limit rotation speed N_{ELIM} is preliminarily altered to a lower rotation speed than the usual rotation speed, i.e., to a rotation speed lower than the first given rotation speed.

The rotation speed variation determining means 94 determines whether or not the second electric motor rotation speed variation ΔN_{M2} exceeds a given variation N1 under a situation where the rotation speed determining means 90 determines that the second electric motor rotation speed N_{M2} exceeds the second given rotation speed. As used herein, the term "second electric motor rotation speed variation ΔN_{M2}" has the same meaning as a second electric motor rotation speed variation rate in control operations (in, for instance, the flowchart) to be repeatedly executed.

When the determination is made that such a condition is satisfied, it is predicted that the second electric motor rotation speed N_{M2} falls in the given high speed rotation state. That is, the rotation speed variation determining means 94 functions as high speed rotation state predicting means for predicting the presence of the second electric motor rotation speed N_{M2} falling in the given high speed rotation state. The prediction is executed based on whether or not the second electric motor rotation speed variation ΔN_{M2} exceeds a given variation N1 under a situation where the second electric motor rotation speed N_{M2} exceeds the second given rotation speed.

As used herein, the term "given variation N1" refers to a determining value, preliminarily obtained and determined on experiments, for determining the second electric motor rotation speed variation ΔN_{M2} to predict that the second electric motor rotation speed N_{M2} falls in the given high speed rotation state. Although such a given variation N1 may be set to a fixed value, the given variation N1 may be determined depending on the second electric motor rotation speed variation ΔN_{M2} when the second electric motor rotation speed N_{M2} exceeds the second given rotation speed.

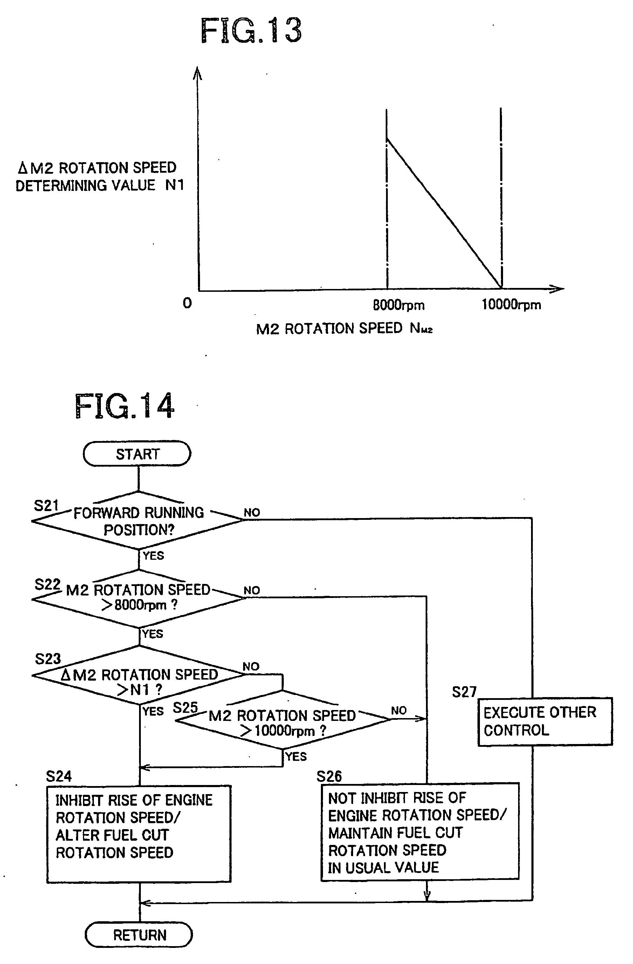

Fig. 13 is a view showing one example of the relationship (given variation map), preliminarily obtained and stored on experiments, between the second electric motor rotation speed N_{M2} and given variation (second electric motor rotation speed variation determining value) N1. As the second electric motor rotation speed N_{M2} increases in value, the second electric motor rotation speed N_{M2} is liable to fall in the given high speed rotation state. From this point of view, it is determined such that in a region where the second electric motor rotation speed N_{M2} exceeds the second rotation speed (of approximately 8000 rpm) to lie at a rotation speed lower than the first rotation speed (of approximately 10000 rpm), the closer the second electric motor rotation speed N_{M2} to the first given rotation speed, the less will be the given variation N1. The rotation speed variation determining means 94 determines (alters) the given variation N1 based on the actual second electric motor rotation speed N_{M2} by referring to, for instance, the given variation map shown in Fig. 13.

If the rotation speed variation determining means 94 does not predict that the second electric motor rotation speed N_{M2} falls in the given high speed rotation state, then, the engine upper limit rotation speed setting means 92 performs a function, in addition to the function set forth above, to allow the upper limit of the engine rotation speed N_{E} to be determined intact. That is, no operation is executed to alter the engine upper limit rotation speed N_{ELIM} determined for the engine 8 to be protected.

If the rotation speed variation determining means 94 predicts that the second electric motor rotation speed N_{M2} falls in the given high speed rotation state, then, the engine upper limit rotation speed setting means 92 sets (alters) the engine upper limit rotation speed N_{ELIM} to be an upper limit value of the engine rotation speed N_{E} with a rotation speed lower than that determined when the rotation speed variation determining means 94 does not predict the presence of the actual second electric motor rotation speed N_{M2} falling in the given high speed rotation state.

In the foregoing, another example has been described above in detail with reference to a mode in which the engine upper limit rotation speed N_{ELIM} is altered depending on the second electric motor rotation speed N_{M2} This can be appreciated that when it is predicted that the second electric motor rotation speed N_{M2} falls in the given high speed rotation state, the rising of the engine rotation speed N_{E} is limited (inhibited or suppressed).

Fig. 14 is a flowchart illustrating a basic sequence of major control operations to be executed by the electronic control device 80, i.e., a basic sequence of control operations to be executed for suppressing an unwanted increase in rotation speed of the second electric motor M2 to allow the same to have increased durability. This sequence is repeatedly executed on an extremely short period of time of the order of approximately, for instance, several milliseconds to several tens milliseconds. The flowchart of Fig. 14 represents another example corresponding to Fig. 11.

In Fig. 14, first, in S21 corresponding to the shift position determining means 88, a current position of the shift lever 52 is determined based on a signal representing the shift position P_{SH} of the shift lever 52, upon which the determination is made whether or not the shift lever 52 is placed in the forward-drive running position.

If the determination in S21 is made negative, then, in S27, the other control than that related to the operation to limit the engine rotation speed N_{E} is executed or the current routine is terminated intact.

In contrast, if the determination in S21 is made positive, then, in S22 corresponding to the rotation speed determining means 90, the determination is made whether or not the second electric motor rotation speed N_{M2} exceeds the second given rotation speed of, for instance, 8000 rpm.

If the determination in S22 is made positive, then, in S23 corresponding to the rotation speed variation determining means 94, the determination is made whether or not the second electric motor rotation speed variation ΔN_{M2} exceeds the given variation N1. That is, the prediction is made whether or not the second electric motor rotation speed N_{M2} falls in the given high speed rotation state. Here, when the determination is made that.. the second electric motor rotation speed variation ΔN_{M2} exceeds the given variation N1, it is predicted that the second electric motor rotation speed N_{M2} falls in the given high speed rotation state. Although the given variation N1 may take a fixed value that is preliminarily determined, the given variation N1 may be determined based on the actual second electric motor rotation speed N_{M2} by referring to, for instance, the given variation map shown in Fig. 13.

If the determination in S23 is made negative, then, in S25 corresponding to the rotation speed determining means 90, the determination is made whether or not the second electric motor rotation speed N_{M2} exceeds the first given rotation speed of, for instance, 10000 rpm.

If the determination in S22 or the determination in S26 is made negative, then, in S26 corresponding to the engine upper limit rotation speed setting means 92, the upper limit of the engine rotation speed N_{E} is determined intact. That is, no engine upper limit rotation speed N_{ELIM}, determined for the engine 8 to be protected, is altered. For instance, the usual engine upper limit rotation speed N_{ELIM} is used intact as the fuel cut-off rotation speed. That is, no rising of the engine rotation speed N_{E} is limited.

On the contrary, if the determination in S23 or the determination in S25 is made positive, then, in S24 corresponding to the engine upper limit rotation speed setting means 92, the engine upper limit rotation speed N_{ELIM} is altered as the upper limit of the engine rotation speed N_{E} to a rotation speed lower than that determined in S26. For instance, the fuel cut-off rotation speed is altered from 5600 rpm to 4800 rpm. That is, the rising of the engine rotation speed N_{E} is limited (inhibited or suppressed).

Further, besides the operation to alter the fuel cut-off rotation speed, the operation may be executed to determine the upper limit of the throttle valve opening Θ_{TH} on the opening side thereof corresponding to, for instance, the current engine upper limit rotation speed N_{ELIM}. In addition, not only the determination on alteration may be executed in terms of such a single point but also a region of the engine upper limit rotation speed N_{ELIM} may be determined by referring to, for instance, the engine upper limit rotation speed map shown in Fig. 10.

In S24, the operation is executed to limit the rising of the engine rotation speed N_{E} at the present moment or the operation is executed to limit the engine rotation speed N_{E} in a way not to exceed the engine upper limit rotation speed N_{ELIM} that is newly set. This automatically limits the rising of the second electric motor rotation speed N_{M2} when the load of the second electric motor is released or drops with an increase in the second electric motor rotation speed N_{M2} due to some reasons occurring during the running of the vehicle under the power-on state. That is, on a stage in which the engine rotation speed N_{E} is stuck, the rising of the second electric motor rotation speed Nm2 is ceased at the second motor increasing possible rotation speed N_{M2max} Thus, the second motor increasing possible rotation speed N_{M2max} can be automatically ensured.

As set forth above, the second illustrated example has, in addition to the advantages of the illustrated example described above, other advantages as described below. That is, when it is predicted that the second electric motor rotation speed N_{M2} falls in the given high speed rotation state, the engine upper limit rotation speed N_{ELIM} is set to a rotation speed lower than that determined for the operation in which no prediction is made that the second electric motor rotation speed N_{M2} falls in the given high speed rotation state. When it is predicted that the second electric motor rotation speed N_{M2} falls in the given high speed rotation state, the engine rotation speed N_{E} is limited so as to lie at a lower rotation speed than that determined for the operation in which no prediction is made that the second electric motor rotation speed N_{M2} falls in the given high speed rotation state. This makes it possible to lower the upper limit of the engine rotation speed N_{E} with a resultant decrease in the second motor increasing possible rotation speed N_{M2max} thereby suppressing an increase in rotation speed of the second electric motor M2.

In the second illustrated example, when the second electric motor rotation speed N_{M2} exceeds the first given rotation speed or when it is predicted that the second electric motor rotation speed N_{M2} falls in the given high speed rotation state, the engine rotation speed N_{E} is limited. This limits the second electric motor rotation speed N_{M2} that is influenced with the engine rotation speed N_{E}. This minimizes the increase in rotation speed of the second electric motor M2, thereby providing improved durability.

In the illustrated example, under a circumstance where the second electric motor rotation speed N_{M2} exceeds the second given rotation speed, if the second electric motor rotation speed variation ΔN_{M2} is greater than the given high speed rotation state N1, it is predicted that the second electric motor rotation speed N_{M2} falls in the given high speed rotation state. Thus, when the second electric motor rotation speed N_{M2} rapidly increases under a status exceeding the second given rotation speed, it is appropriately predicted that the second electric motor rotation speed N_{M2} falls in the given high speed rotation state.

In the illustrated example, the given variation N1 is determined according to the second electric motor rotation speed N_{M2} with the second electric motor rotation speed N_{M2} exceeding the second given rotation speed. This provides improved precision in predicting that the second electric motor rotation speed N_{M2}, influenced with the second electric motor rotation speed N_{M2} and second electric motor rotation speed variation ΔN_{M2}, falls in the given high speed rotation state.

In the illustrated examples described above, for the second electric motor M2 to have improved durability, the upper limit of the engine rotation speed N_{E} is limited so as to restrict the rising of the second electric motor rotation speed N_{M2} such that the second electric motor rotation speed N_{M2} does not fall in the given high speed rotation state.

The transmission mechanism 10, provided with the automatic shifting portion 20 has, besides the fear of durability of the second electric motor M2, a fear of a drop in durability of the automatic shifting portion 20 due to a centrifugal force and plastic deformation thereof occurring on a given rotary element of the automatic shifting portion 20 when a rotation speed of the given rotary element unnecessarily increases, i.e., in a given high speed rotation state. For instance, during the running of the vehicle in the engine running mode under the power-on state, there is a likelihood in that a load of the transmission mechanism 10 (especially, the automatic shifting portion 20) rapidly drops due to some reasons like those encountered in the illustrated examples set forth above. In this case, due to the presence of the power-on state, the engine rotation speed N_{E} increases with a resultant increase in rotation speed of the given rotary element of the automatic shifting portion 20 to fall in a given high speed rotation state. This results in a fear of the occurrence of deteriorated durability.

The given rotary element of the automatic shifting portion 20 may include any of rotary elements constituting the automatic shifting portion 20. Here, the given rotary element of the automatic shifting portion 20 may be exemplarily represented with an input shaft constituting one of component parts forming an input line of the automatic shifting portion 20, i.e., the power transmitting member 18. A rotation speed of the input shaft is represented as a shifting-portion input rotation speed N_{AT}. As used herein, the term "given high speed rotation state of the shifting-portion input rotation speed N_{AT}" refers to a rotation state in which, for instance, the shifting-portion input rotation speed N_{AT} reaches a high rotation speed to the extent exceeding a shifting-portion input allowable rotation speed N_{ATLIM}. As used herein, the term "shifting-portion input allowable rotation speed N_{ATLIM}" refers to a shifting-portion input upper limit rotation speed that can be usually used in a shifting-portion input rotation speed range that does not exceed a maximum allowable rotation speed at which the input shaft of the automatic shifting portion 20 is allowable to rotate. Such a parameter is preliminarily obtained and determined on experiments in consideration of durability or the like of the automatic shifting portion 20 (especially the input shaft thereof).

In the third illustrated example, the engine upper limit rotation speed N_{ELIM} is altered depending on the shifting-portion input rotation speed N_{AT}. That is, with the transmission mechanism 10, the engine rotation speed N_{E} has an influence on the shifting-portion input rotation speed N_{AT} and, hence, the engine upper limit rotation speed N_{ELIM} specifies an upper limit rotation speed (shifting-portion input rising available rotation speed) N_{ATmax} that can be rise. From this viewpoint, the operation is executed to alter the engine upper limit rotation speed N_{ELIM} determined for the engine 8 to be usually protected. This limits the rising of the shifting-portion input rotation speed N_{AT} so as to avoid the shifting-portion input rotation speed N_{AT} from falling into the given high speed rotation state.

As a result, no operation is executed to detect the rising of the shifting-portion input rotation speed N_{AT} for subsequently limiting (interrupting or suppressing) the same but the engine upper limit rotation speed N_{ELIM} can be preliminarily altered in accordance with the shifting-portion input rotation speed N_{AT}. Even if the load of the automatic shifting portion 20 drops under the power-on state to cause an increase in the shifting-portion input rotation speed N_{AT}, the shifting-portion input rotation speed N_{AT} can be ensured to cease rising at the shifting-portion input rising available rotation speed N_{ATmax} of a value lower than a shifting-portion input allowable rotation speed N_{ATLIM}. This allows the automatic shifting portion 20 to have improved durability.

More particularly, the shift position determining means 88 performs a function, in place of the function mentioned above or in addition thereto, to determine whether or not the shift lever 52 is placed in the forward-drive running position. As used herein, the term "forward-drive running position" refers to a running state with a fear of the engine rotation speed N_{E} increasing to the extent that the shifting-portion input rotation speed N_{AT} falls in the given high speed rotation state.

With the shift position determining means 88 determined that the forward-drive running position is selected, the rotation speed determining means 90 performs a function, in place of the function mentioned above or in addition thereto, to determine whether or not the shifting-portion input rotation speed N_{AT} exceeds a first given rotation speed AT. As used herein, the term "first given rotation speed AT" refers to a determining value for determining whether to alter the engine upper limit rotation speed N_{ELIM} in preparation to the rising of the shifting-portion input rotation speed NAT during a drop occurring in load of the automatic shifting portion 20. This represents a rotation speed, lower than the shifting-portion input allowable rotation speed N_{ATLIM}, which is preliminarily determined on experiments. For instance, this determining value is set to a value of approximately 10000 rpm with the shifting-portion input allowable rotation speed N_{ATLIM} ranging in a value of approximately 12000 rpm.

Under a circumstance where the rotation speed determining means 90 determines that the shifting-portion input rotation speed N_{AT} still doesn't exceed the first given rotation speed AT, the engine upper limit rotation speed setting means 92 performs a function, in place of the function mentioned above or in addition thereto, not to alter the usual engine upper limit rotation speed N_{ELIM} while determining the upper limit of the engine rotation speed N_{E}. That is, no usual engine upper limit rotation speed N_{ELIM}. determined for the engine 8 to be protected, is altered.

On the contrary, if the rotation speed determining means 90 determines that the shifting-portion input rotation speed N_{AT} exceeds the first given rotation speed AT, the engine upper limit rotation speed setting means 92 performs a function as described below. That is, the engine upper limit rotation speed N_{ELIM} is set (altered) to a rotation speed lower than that determined for a case in that no determination is made that the shifting-portion input rotation speed N_{AT} exceeds the first given rotation speed AT. For instance, if the usual engine upper limit rotation speed N_{ELIM} has a value of approximately 5600 rpm, the usual engine upper limit rotation speed N_{ELIM} is altered to a value of approximately 4800 rpm.

In stead of altering the engine upper limit rotation speed N_{ELIM} in terms of a single point as to whether or not the shifting-portion input rotation speed N_{AT} exceeds the first given rotation speed AT, a modification may be adopted in a manner as described below. In a region where the shifting-portion input rotation speed N_{AT} lies at a rotation speed lower than the shifting-portion input allowable rotation speed N_{ATLIM} but remains at a high rotation speed, the engine upper limit rotation speed N_{ELIM} may be altered so as to decrease depending on the shifting-portion input rotation speed N_{AT}.

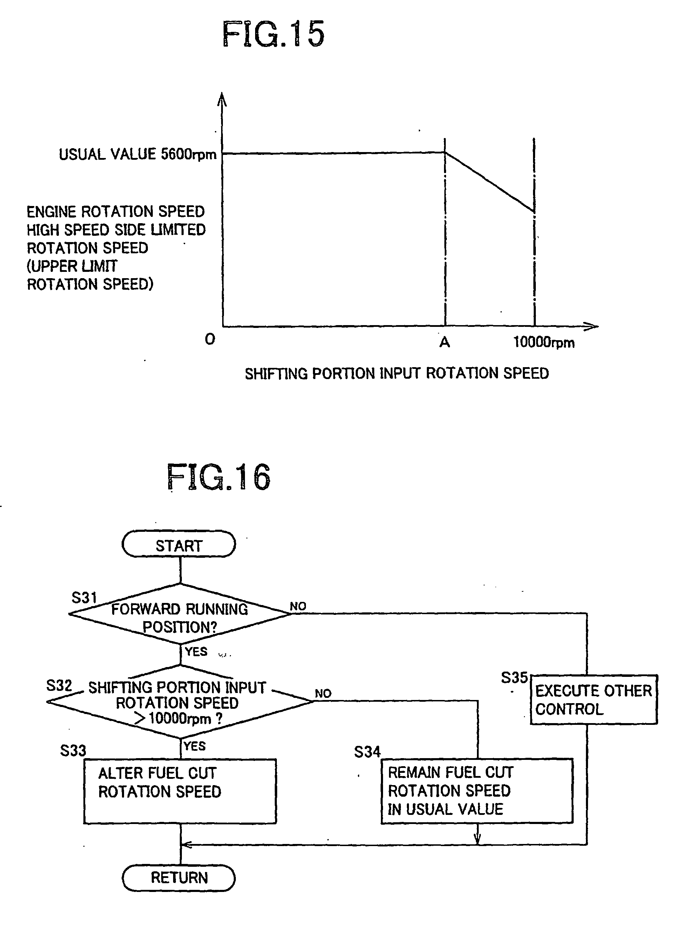

Fig. 15 is a view showing the relationship (an engine upper limit rotation speed map) that is prel.iminarily obtained and stored on experiments in terms of the shifting-portion input rotation speed N_{AT} and the engine upper limit rotation speed N_{ELIM}. With an increase in the shifting-portion input rotation speed N_{AT}, the shifting-portion input rotation speed N_{AT} is more liable to fall in the given high speed rotation state during a drop occurring in load of the automatic shifting portion 20. From this perspective, the relationship is specified in Fig. 15 for a high speed rotating region with the shifting-portion input rotation speed N_{AT} exceeding a given value A such that the higher the shifting-portion input rotation speed N_{AT}, the lower will be the engine upper limit rotation speed N_{ELIM}. The engine upper limit rotation speed setting means 92 determines the engine upper limit rotation speed N_{ELIM} based on the shifting-portion input rotation speed N_{AT} by referring to the engine upper limit rotation speed map shown in Fig. 15.

In the foregoing, the present example has been described in detail with reference to a feature in which the engine upper limit rotation speed N_{ELIM} is altered depending on the shifting-portion input rotation speed N_{AT}. Such an alteration can be regarded to be an operation to limit (interrupt or suppress) the rising of the engine rotation speed N_{E} when the shifting-portion input rotation speed N_{AT} exceeds the first given rotation speed AT or lies in the high speed rotating region.

Fig. 16 is a flowchart illustrating a basic sequence of major control operations to be executed by the electronic control device 80, i.e., a basic sequence of control operations for suppressing an unwanted increase in rotation speed of the automatic shifting portion 20 to allow the same to have increased durability. This sequence is repeatedly executed on an extremely short period of time of the order of approximately, for instance, several milliseconds to several tens milliseconds. The flowchart, shown in Fig. 16, represents another example corresponding to that of Fig. 11.

In Fig. 16, first, in step S31 corresponding to the shift position determining means 88, a current position of the shift lever 52 is determined based on a signal representing the shift position P_{SH} of the shift lever 52.

If the determination in S31 is made negative, then, in S35, the other control than the control related to the operation to limit the engine rotation speed N_{E} is executed or the current routine is terminated intact.

If the determination in S31 is made positive, then, in S32 corresponding to the rotation speed determining means 90, the determination is made whether or not the shifting-portion input rotation speed N_{AT} exceeds the first given rotation speed AT of, for instance, 10000 rpm.

If the determination in S32 is made negative, then, in S34 corresponding to the engine upper limit rotation speed setting means 92, the usual engine upper limit rotation speed N_{ELIM} is determined intact to be the upper limit of the engine rotation speed N_{E}. That is, no usual engine upper limit rotation speed N_{ELIM}, determined for the engine 8 to be protected, is altered. For instance, the fuel cut-off rotation speed remains unchanged to lie in the usual engine upper limit rotation speed N_{ELIM}..

On the contrary, if the determination in S32 is made positive, then, in S33 corresponding to the engine upper limit rotation speed setting means 92, the engine upper limit rotation speed N_{ELIM} is altered to a lower rotation speed than that determined in S34 to be the upper limit value of the engine rotation speed N_{E}. For instance, the fuel cut-off rotation speed is altered from the value of approximately 5600 rpm to the value of approximately 4800 rpm. Instead of altering the fuel cut-off rotation speed, the upper limit of the throttle valve opening Θ_{TH} on the opening side thereof, corresponding to the engine upper limit rotation speed N_{ELIM}. may be determined to be the upper limit of the engine rotation speed NE. Moreover, not only the engine upper limit rotation speed N_{ELIM} is determined in terms of a single point but also the engine upper limit rotation speed N_{ELIM} may be determined upon referring to, for instance, the engine upper limit rotation speed map shown in Fig. 15.

The engine upper limit rotation speed N_{ELIM} is newly set again in S33. Thus, when the load on the automatic shifting portion 20 is released or decreases with a resultant increase in the shifting-portion input rotation speed N_{AT} due to some reason during the running of the vehicle in the engine running mode under the power-on state, the altered engine upper limit rotation speed N_{ELIM} automatically limits the rising of the shifting-portion input rotation speed N_{AT}. That is, the shifting-portion input rotation speed N_{AT} is ceased increasing at a shifting-portion input rising available rotation speed N_{ATmax} on a stage with the engine rotation speed N_{E} sticking to the engine upper limit rotation speed N_{ELIM}. Thus, no operation is executed to detect the rising of the shifting-portion input rotation speed N_{AT} for executing a subsequent operation in next step but the operation is executed to automatically ensure the shifting-portion input rising available rotation speed N_{ATmax}.

In the third illustrated example, as set forth above, the engine rotation speed N_{E} is limited in a way not to exceed the engine upper limit rotation speed N_{ELIM}. The engine upper limit rotation speed N_{ELIM} is altered depending on the shifting-portion input rotation speed N_{AT}. This makes it possible to alter the shifting-portion input rising available rotation speed N_{ATmax}, influenced by the engine upper limit rotation speed N_{ELIM}. depending on the current shifting-portion input rotation speed N_{AT}. For instance, if the shifting-portion input rotation speed N_{AT} lies at a relatively high level, then, the engine upper limit rotation speed N_{ELIM} is lowered, making it possible to alter the shifting-portion input rising available rotation speed N_{ATmax} to a lower level. Thus, the automatic shifting portion 20 suppresses an increase in rotation speed of the input shaft, thereby providing improved durability.

From another point of view, the engine upper limit rotation speed N_{ELIM} can be preliminarily altered depending on the shifting-portion input rotation speed N_{AT} so as to prevent the rotation speed of the input shaft from increasing Even if a rapid drop occurs in load of the automatic shifting portion 20 to increase the shifting-portion input rotation speed N_{AT} due to the running of the vehicle in the engine running mode under the power-on state, the shifting-portion input rotation speed N_{AT} can be ensured to be less than the shifting-portion input rising available rotation speed N_{ATmax}, enabling the automatic shifting portion 20 to have improved durability.

In the illustrated example, when the shifting-portion input rotation speed N_{AT} exceeds the first given rotation speed AT, the engine upper limit rotation speed N_{ELIM} is set to a lower rotation speed than that set for a case in which no shifting-portion input rotation speed N_{AT} exceeds the first given rotation speed AT. Therefore, when the shifting-portion input rotation speed N_{AT} exceeds the first given rotation speed AT, the engine rotation speed N_{E} is limited to a lower rotation speed than that set for a case where no shifting-portion input rotation speed N_{AT} exceeds the first given rotation speed AT. This lowers the upper limit the engine rotation speed N_{E} while lowering the shifting-portion input rising available rotation speed N_{ATmax}, thereby suppressing an increase in rotation speed of the automatic shifting portion 20.

In the illustrated example, when the shifting-portion input rotation speed N_{AT} exceeds the first given rotation speed AT, the engine rotation speed N_{E} is limited. This limits the shifting-portion input rotation speed N_{AT} influenced by the engine rotation speed N_{E}. This suppresses the increase in rotation speed of the input shaft of the automatic shifting portion 20, causing the automatic shifting portion 20 to have improved durability.

In the illustrated example, the limitation of the engine rotation speed N_{E} is executed upon performing the fuel cur-off in a way not to exceed the engine upper limit rotation speed N_{ELIM}. Therefore, the engine rotation speed N_{E} can be properly limited to suppress the increase in rotation speed of the input shaft of the automatic shifting portion 20.

In the illustrated example, the limitation of the engine rotation speed N_{E} is executed upon setting the upper limit of the throttle valve opening θ_{TH} on the opening side thereof such that no engine rotation speed NE exceeds the engine upper limit rotation speed N_{ELIM}. As a result, the engine rotation speed N_{E} can be properly limited, thereby suppressing the increase in rotation speed of the input shaft of the automatic shifting portion 20.

In the third illustrated examples described above, when the shifting-portion input rotation speed N_{AT} exceeds the first given rotation speed AT, the engine upper limit rotation speed N_{ELIM} is preliminarily set to the rotation speed lower than the usual rotation speed without detecting the increase in the shifting-portion input rotation speed N_{AT}. This addresses an issue arising from the increase in the shifting-portion input rotation speed N_{AT} due to, for instance, the rapid drop in load of the automatic shifting portion 20. That is, the shifting-portion input rotation speed N_{AT} is automatically ensured to cease rising at the shifting-portion input rising available rotation speed N_{ATmax} of a value lower than the shifting-portion input allowable rotation speed N_{ATmax} (that is, the rotation speed at which the shifting-portion input rotation speed N_{AT} falls in the given high speed rotation state).

In contrast, with the fourth example, the engine upper limit rotation speed N_{ELIM} is set to a rotation speed lower than the usual rotation speed when it is predicted that the shifting-portion input rotation speed N_{AT} falls in the given high speed rotation state. This allows the fourth example to have the same advantageous effect as that of the third example.

The present example mainly differs from the third example in that the rising of the shifting-portion input rotation speed N_{AT} is actually detected. In this case, there occurs a delay in operation in contrast to a case wherein the engine upper limit rotation speed N_{ELIM} is set without detecting the increase in the shifting-portion input rotation speed N_{AT}. To compensate such a delay, no operation is executed to detect the presence of the shifting-portion input rotation speed N_{AT} actually falling in the given high speed rotation state but an operation is executed to predict the presence of the shifting-portion input rotation speed N_{AT} actually falling in the given high speed rotation state.

More particularly, when the shift position determining means 88 determines that the shift lever 52 is placed in the forward-drive running position, the rotation speed determining means 90 performs a function, in addition to the function executed in the third example set forth above, to determine whether or not the shifting-portion input rotation speed N_{AT} exceeds a second first given rotation speed AT. As used herein, the term "second first given rotation speed AT" refers to a value enabling a prediction that the shifting-portion input rotation speed N_{AT} falls in the given high speed rotation state during the rising of the shifting-portion input rotation speed N_{AT}. This represents a condition value, lower than the first given rotation speed AT, which is preliminarily determined on experiments. For instance, if the first given rotation speed AT takes a value of approximately 10000 rpm, then, the second first given rotation speed AT is set to a value of approximately 8000 rpm. That is, if the shifting-portion input rotation speed N_{AT} exceeds the first given rotation speed AT, the engine upper limit rotation speed N_{ELIM} is preliminarily altered to the lower rotation speed and, hence, the second first given rotation speed AT is set to the value lower than the first given rotation speed AT.

The rotation speed variation determining means 94 performs a function, in place of the function described above or in addition thereto, in a manner described below. That is, the rotation speed variation determining means 94 determines whether or not a shifting-portion input rotation speed variation ΔN_{AT} exceeds a given variation N1AT under a situation where the rotation speed determining means 90 determines that the shifting-portion input rotation speed N_{AT} exceeds the second given rotation speed AT. As used herein, the term "shifting-portion input rotation speed variation ΔN_{AT}" has the same meaning as a shifting-portion input rotation speed variation rate in control operations (shown in, for instance, the flowchart) that are repeatedly executed. When the determination is made that the shifting-portion input rotation speed variation ΔN_{AT} is greater than the given variation N1AT, it is predicted that the shifting-portion input rotation speed N_{AT} falls in the given high speed rotation state.

That is, the rotation speed variation determining means 94 functions as high speed rotation state predicting means for predicting the presence of the shifting-portion input rotation speed N_{AT} falling in the given high speed rotation state. The prediction is executed based on whether or not the shifting-portion input rotation speed variation ΔN_{AT} is greater than the given variation N1AT under a situation where the shifting-portion input rotation speed N_{AT} exceeds the second first given rotation speed AT.

As used herein, the term "given variation N1AT" refers to a determining value for the shifting-portion input rotation speed variation ΔN_{AT}, preliminarily obtained and determined on experiments, for predicting that the shifting-portion input rotation speed N_{AT} falls in the given high speed rotation state. Although such a given variation N1AT may be set to a fixed value, the given variation N1AT may be determined depending on the shifting-portion input rotation speed variation ΔN_{AT} when the shifting-portion input rotation speed N_{AT} exceeds the second first given rotation speed AT.

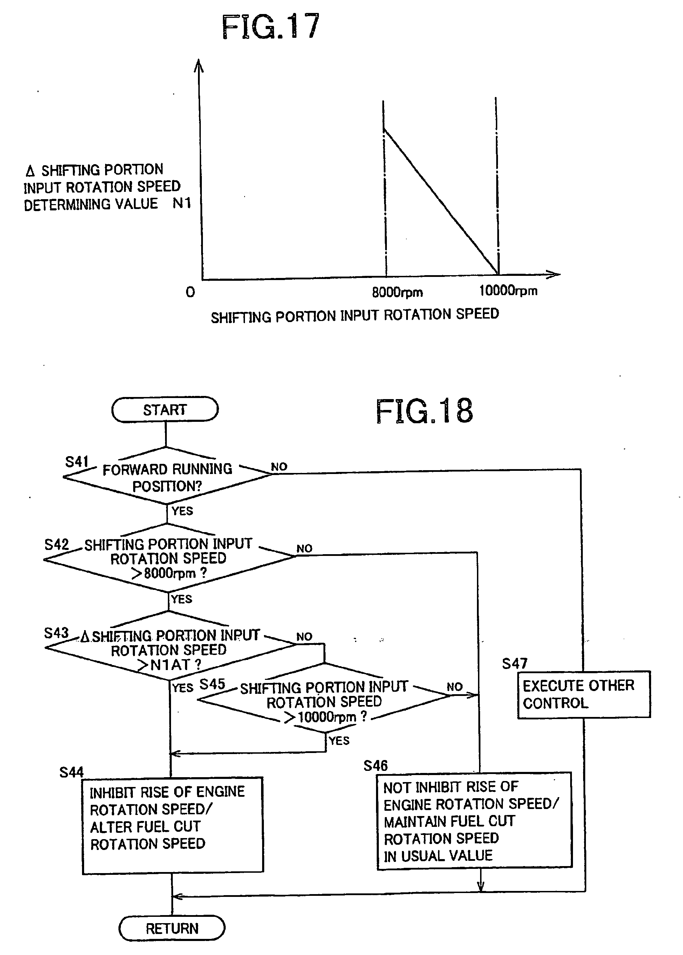

Fig. 17 is a view showing one example of the relationship (given variation map), preliminarily obtained and stored on experiments, between the shifting-portion input rotation speed N_{AT} and the given variation (shifting-portion input rotation speed variation determining value) N1AT. In Fig. 17, the higher the shifting-portion input rotation speed NAT, the easier will be the shifting-portion input rotation speed N_{AT} to fall in the given high speed rotation state.

From this point of view, in a region where the shifting-portion input rotation speed N_{AT} goes beyond the second given rotation speed AT (of approximately 8000 rpm) to be less than the first given rotation speed AT (of approximately 10000 rpm), it is determined such that the closer the shifting-portion input rotation speed N_{AT} to the first given rotation speed AT, the less will be the given variation N1AT. The rotation speed variation determining means 94 determines (alter) the given variation N1 AT based on the actual shifting-portion input rotation speed N_{AT} by referring to, for instance, the given variation map shown in Fig. 17.

The engine upper limit rotation speed setting means 92 perform a function, in addition to the function set forth above with reference to the third example, in a manner described below. That is, if the rotation speed variation determining means 94 does not predict that the shifting-portion input rotation speed N_{AT} falls in the given high speed rotation state, the engine upper limit rotation speed setting means 92 sets (alters) the engine upper limit rotation speed N_{ELIM} intact to be the upper limit value of the engine rotation speed N_{E}. That is, no operation is executed to alter the usual engine upper limit rotation speed N_{ELIM} determined for the engine 8 to be protected.

Under a circumstance where the rotation speed variation determining means 94 predicts that the shifting-portion input rotation speed N_{AT} falls in the given high speed rotation state, the engine upper limit rotation speed setting means 92 sets (alters) the engine upper limit rotation speed N_{ELIM} to a rotation speed lower than that determined for a case in which no prediction is made of the given high speed rotation state. For instance, like the examples set forth above, if the usual engine upper limit rotation speed N_{ELIM} takes a value of approximately 5600 rpm, then, the relevant engine upper limit rotation speed N_{ELIM} is set to a value of approximately 4800 rpm.

In the foregoing, the illustrated example has been described above in detail with reference to the mode in which the engine upper limit rotation speed N_{ELIM} is altered depending on the actual shifting-portion input rotation speed N_{AT}. This can be regarded that when the prediction is made that the shifting-portion input rotation speed N_{AT} falls in the given high speed rotation state, the rising of the engine rotation speed N_{E} is limited (inhibited or suppressed).

Fig. 18 is a flowchart illustrating a basic sequence of major control operations to be executed by the electronic control device 80, i.e., a basic sequence of control operations for suppressing an unwanted increase in rotation speed of the input shaft of the automatic shifting portion 20 to allow the same to have increased durability. This sequence is repeatedly executed on an extremely short period of time of the order of approximately, for instance, several milliseconds to several tens milliseconds. The flowchart of Fig. 18 represents another example corresponding to Fig. 14.

In Fig. 18, first, in S41 corresponding to the shift position determining means 88, a current position of the shift lever 52 is determined based on a signal representing the shift position P_{SH} of the shift lever 52, thereby determining whether or not the shift lever 52 is placed in the forward-drive running position.

If the determination in S41 is made negative, then, in S47, the other control than the control related to the operation to limit the engine rotation speed N_{E} is executed or the current routine is terminated intact.

If the determination in S41 is made positive, then, in S42 corresponding to the rotation speed determining means 90, the determination is made whether or not the shifting-portion input rotation speed N_{AT} exceeds the second given rotation speed AT of, for instance, 8000 rpm.

If the determination in S42 is made positive, then, in S43 corresponding to the rotation speed variation determining means 94, the determination is made whether or not the shifting-portion input rotation speed variation ΔN_{AT} exceeds the given variation N1AT. That is, the prediction is made whether or not the shifting-portion input rotation speed N_{AT} falls in the given high speed rotation state. Here, when the determination is made that the shifting-portion input rotation speed variation ΔN_{AT} exceeds the given variation N1AT, it is predicted that the shifting-portion input rotation speed, N_{AT} falls in the given high speed rotation state. Although the given variation N1AT may take a fixed value that is preliminarily determined, the given variation N1AT may be determined based on the shifting-portion input rotation speed N_{AT} by referring to, for instance, the given variation map shown in Fig. 17.

If the determination in S43 is made negative, then, in S45 corresponding to the rotation speed determining means 90, the determination is made whether or not the shifting-portion input rotation speed N_{AT} exceeds the first given rotation speed AT of, for instance, 10000 rpm.

On the contrary, if the determination in S42 or determination in S45 is made negative, the operation proceeds to S46 corresponding to the engine upper limit rotation speed setting means 92. In S46, the usual engine upper limit rotation speed N_{ELIM}, determined for the engine 8 to be protected, remains unchanged to be used intact as the upper limit of the engine rotation speed N_{E}. For instance, the usual engine upper limit rotation speed N_{ELIM} is used intact as the fuel cut-off rotation speed. That is, no limitation is effectuated on the rising of the engine rotation speed N_{E}.

If the determination in S43 or determination in S45 is made positive, then, the operation goes to S44 corresponding to the engine upper limit rotation speed setting means 92. In S44, the engine upper limit rotation speed N_{ELIM} is altered as the upper limit of the engine rotation speed N_{E} to a rotation speed lower than that determined in 846. For instance, the fuel cut-off rotation speed is altered from a value of approximately 5600 rpm to a value of approximately 4800 rpm. That is, the rising of the engine rotation speed N_{E} is limited (inhibited or suppressed).

Instead of altering the fuel cut-off rotation speed, the operation may be executed to alter the upper limit of the throttle valve opening Θ_{TH} on the opening side thereof, corresponding to the engine upper limit rotation speed N_{ELIM}, as the upper limit value of the engine rotation speed N_{E}. In addition, not only the engine upper limit rotation speed N_{ELIM} is determined in terms of a single point but also a region of the engine upper limit rotation speed N_{ELIM} may be determined by referring to, for instance, the engine upper limit rotation speed map shown in Fig. 15.

In 544, the rising of the engine rotation speed N_{E} is limited at the present moment or the engine rotation speed N_{E} is limited in a way not to exceed the engine upper limit rotation speed N_{ELIM} that is newly set. This automatically limits the rising of the shifting-portion input rotation speed N_{AT} resulting from the load released from the automatic shifting portion 20 or the load thereof being decreased due to some reasons occurring during the running of the vehicle under the power-on state. That is, the shifting-portion input rotation speed NAT is ceased increasing at the shifting-portion input rising available rotation speed N_{ATmax} in a stage with the engine rotation speed N_{E} being stuck in state. This provides an advantage of automatically ensuring the shifting-portion input rising available rotation speed N_{ATmax}

As set forth above, the fourth illustrated example has, in addition to the advantage of the third example described above, other advantage as described below. That is, when it is predicted that the shifting-portion input rotation speed N_{AT} falls in the given high speed rotation state, the engine upper limit rotation speed N_{ELIM} is set to the rotation speed lower than that determined for the case wherein no prediction is made of the presence of the given high speed rotation state. Thus, when it is predicted that the shifting-portion input rotation speed N_{AT} falls in the given high speed rotation state, the engine rotation speed N_{E} is limited to the lower rotation speed than that determined for the absence of the given high speed rotation state being predicted. This makes it possible to lower the upper limit of the engine rotation speed N_{E} with a resultant decrease in the shifting-portion input rising available rotation speed N_{ATmax}, thereby suppressing the input shaft of the automatic shifting portion 20 from increasing in rotation speed.

In the illustrated example, when the shifting-portion input rotation speed N_{AT} exceeds the first given rotation speed AT or when it is predicted that the shifting-portion input rotation speed N_{AT} falls in the given high speed rotation state, the engine rotation speed N_{E} is limited. This limits the shifting-portion input rotation speed N_{AT} that is influenced with the engine rotation speed N_{E}. This suppresses the increase in rotation speed of the input shaft of the automatic shifting portion 20, which can consequently have improved durability_{.}

In the illustrated example, when the shifting-portion input rotation speed variation ΔN_{AT} exceeds the given variation N1AT with the shifting-portion input rotation speed N_{AT} exceeding the second first given rotation speed AT, it is predicted that the shifting-portion input rotation speed N_{AT} falls in the given high speed rotation state. Thus, when the shifting-portion input rotation speed N_{AT} rapidly increases under a status exceeding the second first given rotation speed AT, it can be appropriately predicted that the shifting-portion input rotation speed N_{AT} falls in the given high speed rotation state.

In the illustrated example, the given variation N1AT is determined according to.the shifting-portion input rotation speed NAT when exceeding the second first given rotation speed AT. This provides improved precision in predicting that the shifting-portion input rotation speed N_{AT}, influenced with the shifting-portion input rotation speed N_{AT} and shifting-portion input rotation speed variation ΔN_{AT}, falls in the given high speed rotation state.

### <Embodiment>

The engine rotation speed limiting means 86 in the above mentioned first to fourth example limits the engine rotation speed N_{E} so as not to exceed the engine upper limit rotation speed N_{ELIM} by performing the fuel-cut or limiting the throttle valve opening θ_{TH} of the electronic throttle valve 62. In the fuel cut, supply of the fuel from the fuel injection device 66 to the engine 8 is halted or suppressed. The electronic throttle valve 62 is provided for controlling supplying amount of the fuel-air mixture to the engine 8.

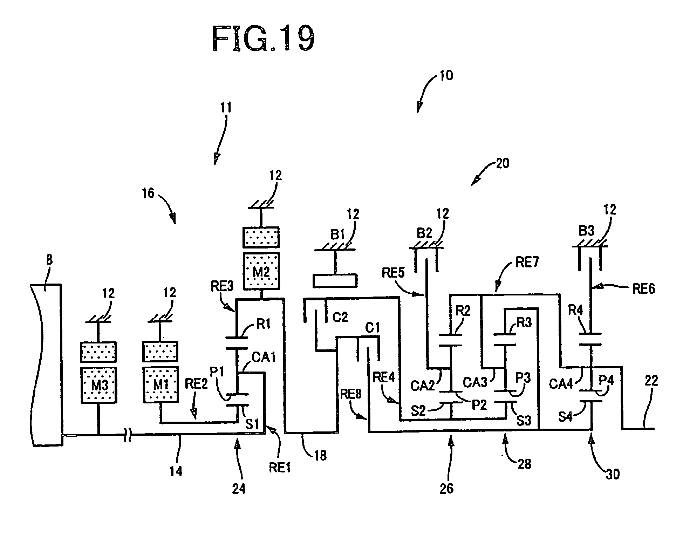

In the embodiment shown in Fig. 19, the engine rotation speed N_{E} is limited by a third electrical motor M3 which is directly connected to the engine 8 and is controlled by the electronic control unit 80. The engine rotation speed limiting means 86 for limiting the engine rotation speed Na using the third electrical motor M3 can be applied to any of the first to fourth examples mentioned above. Here, an example in which the engine rotation speed limiting means 86 is applied to the first example will be explained.

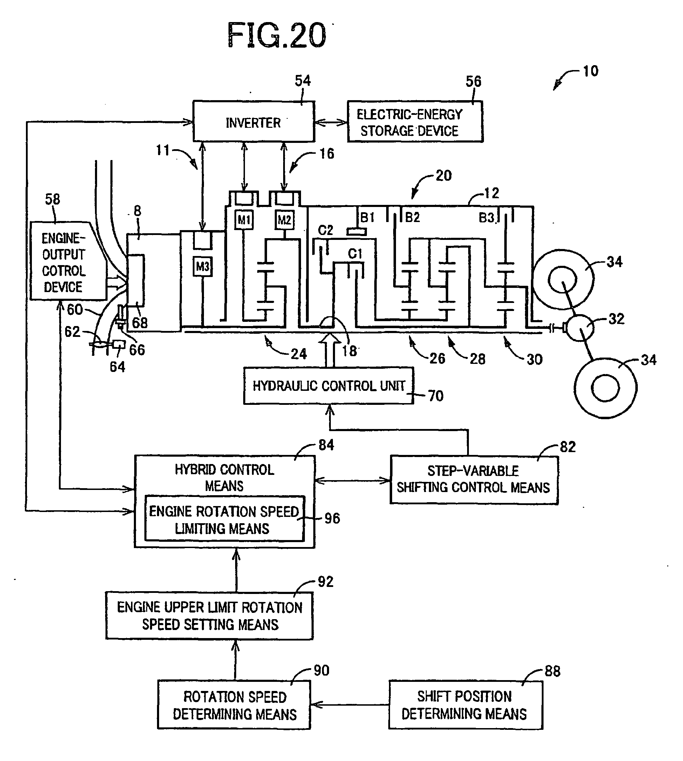

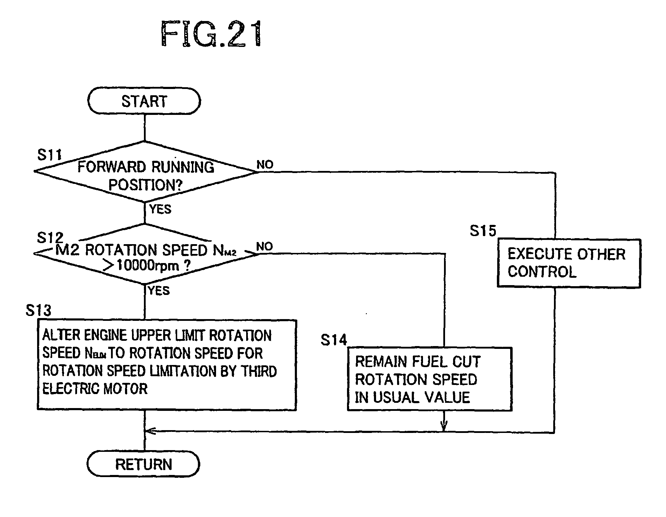

Fig. 19 is a skeleton view for explaining structure of a drive system for a hybrid vehicle according to the illustrated embodiment, Fig. 20 is a functional diagram for explaining a control function of the electronic control unit 80, and Fig. 21 is a flowchart for explaining a control operation of the electronic control unit 80. Figs. 19, 20 and 21 respectively correspond to above Figs. 1, 7 and 11.

As shown in Figs. 19 and 20, an engine 8 in this embodiment includes a third electric motor M3 which is directly connected to a crank shaft thereof, which differs from the engine 8 in the first example. This third electric motor M3 is, likewise the first electric motor M1 and the second electric motor M2, a so-called motor-generator having also the power generating function. The third electric motor M3 is sufficiently connected to the crank shaft in the power transmissive state regardless of position of the crank shaft.

In Fig. 20, engine rotation speed control means 96 of the illustrated embodiment uses the third electric motor M3 to limit the engine rotation speed NE so as not exceed the engine upper limit rotation speed N_{ELIM}. For example, the engine rotation speed control means 96 brings the third electric motor M3 into a regeneration state to limit the engine rotation speed N_{E}, when the engine rotation speed N_{E} tends to exceed the engine upper limit rotation speed N_{ELIM}. In this way, an over revolution (excessive rotation) of the engine 8 is prevented.

S13 corresponding to the engine upper limit rotation speed setting means 92 alters, similar to the first example, an engine upper limit rotation speed N_{ELIM} to a lower rotation speed which is lower than that in the above S14, as the upper limit of the engine rotation speed N_{E}. With such alteration, when the load of the second electric motor M2 is released or decreased for some reason to resultantly rise the second electric motor rotation speed N_{M2} during the engine running in the power-on state, the engine rotation speed limiting means 86 automatically limits increase of the second electric motor rotation speed N_{M2} by the altered engine upper limit rotation speed N_{ELIM}. Thus, the embodiment can render the advantageous effect equivalent to that in the first example.

In addition, the engine rotation speed control means 96 of the illustrated embodiment performs the engine rotation speed limiting control so that the engine rotation speed N_{E} does not exceed the engine upper limit rotation speed N_{ELIM} by the third electric motor M3 connected to the engine 8. Accordingly, compared with the fuel cut which interrupts supply of the fuel from the fuel injection device 66 to the engine 8, or the upper limit setting in the opening side of the throttle valve opening Θ_{TH} which limits supplying amount of the fuel to the engine 8, the high responsibility can be obtained in the control operation for limiting the engine rotation speed N_{E}.

With the first to fourth examples set forth above, for instance, the engine upper limit rotation speed N_{ELIM} is newly determined with the view to automatically limiting the rising of the second electric motor rotation speed N_{M2} using the engine upper limit rotation speed N_{ELIM} under a situation where the load is released from the second electric motor M2 or decreases due to some reasons during the running of the vehicle in the engine running mode under the power-on state. However, the re-determination may be conducted for positively executing a control to allow the first electric motor MI to prevent the second electric motor from rotating at a high speed upon utilizing the differential action of the differential portion 11 in terms of the altered engine upper limit rotation speed N_{ELIM}. For instance, controlling the first electric motor M1 to increase a rotation speed of the first sun gear S1 blocks the rising of the second motor rotation speed N_{M2} at the second electric motor increasing possible rotation speed N_{M2max} on a stage, like the operations achieved in the embodiments described above, in which the engine rotation speed N_{E} is stuck to the altered engine upper limit rotation speed N_{ELIM}.

In the illustrated embodiments set forth above, the engine upper limit rotation speed N_{ELIM} is newly determined with the view to automatically limiting the rising of the shifting-portion input rotation speed N_{AT} using the altered engine upper limit rotation speed N_{ELIM} under a situation where the load is released from the automatic transmission 20 or decreases due to some reasons during the running of the vehicle in the engine running mode under the power-on state. However, the re-determination may be conducted for positively executing a control to allow the first electric motor MI to prevent the input shaft of the automatic shifting portion 20 from rotating at a high speed upon utilizing the differential action of the differential portion 11 in terms of the altered engine upper limit rotation speed N_{ELIM}.

For instance, controlling the first electric motor M1 to increase a rotation speed of the first sun gear S1 blocks the rising of the shifting-portion input rotation speed N_{AT} at the shifting-portion input rising available rotation speed N_{ATmax} on a stage, like the operations achieved in the embodiments described above, in which the engine rotation speed NE is stuck to the engine upper limit rotation speed N_{ELIM}.

In the illustrated embodiment set forth above, while the differential portion 11 (power distributing mechanism 16) is configured to function as the electrically controlled continuously variable transmission in which the speed ratio γ0 is continuously varied from the minimal value γ0mim, to the maximal value γ0max. However, the present invention may be applied even to a case wherein the speed ratio γ0 of the differential, portion 11 is not continuously varied but pretended to vary step-by-step with the use of a differential action.

In the illustrated embodiment set forth above, moreover, the differential portion 11 may be of the type that includes a differential action limiting device incorporated in the power distributing mechanism 16 for limiting a differential action to be operative as at least a forward two-stage step-variable transmission.

With the power distribution mechanisms 16 of the illustrated embodiments, the first carrier CA1 is connected to the engine 8; the first sun gear S1 is connected to the first electric motor M1; and the first ring gear R1 is connected to the power transmitting member 18. However, the present invention is not necessarily limited to such connecting arrangement, and the engine 8, first electric motor M1 and power transmitting member 18 have no objection to be connected to either one of the three elements CA1, S1 and RI of the first planetary gear set 24.

Although the illustrated embodiment has been described with reference to the engine 8 directly connected to the input shaft 14, these component parts may suffice to be operatively connected via, for instance, gears, belts or the like. No need may arise for the engine 8 and the input shaft 14 to be necessarily disposed on a common axis.

Further, while the illustrated embodiment has been described with reference to the first electric motor M1 and the second electric motor M2 wherein the first electric motor M1 is coaxially disposed with the drive apparatus input shaft 14 and connected to the first sun gear S1 upon which the second electric motor M2 is connected to the power transmitting member 18. However, no need arises for these component parts to be necessarily placed in such connecting arrangement. For example, the first electric motor M1 may be connected to the first sun gear S1 through gears, a belt or the like, and the second electric motor M2 may be connected to the power transmitting member 18.

In the illustrated embodiment, further, the hydraulically operated frictional coupling devices such as the first and second clutches C1, C2 may include magnetic type clutches such as powder (magnetic powder) clutches, electromagnetic clutches and meshing type dog clutches, and electromagnetic type and mechanical coupling devices. For instance, with the electromagnetic clutches being employed, the hydraulic control circuit 70 may not include a valve device for switching hydraulic passages and may be replaced with a switching device or electromagnetically operated switching device or the like that are operative to switch electrical command signal circuits for electromagnetic clutches.

Further, in the illustrated embodiment, the automatic transmission portion 20, 72 is disposed in the power transmitting path between the power transmitting member 18 serving as the output member of the differential portion 11, that is the power distributing mechanism 16 and the drive wheels 38. However, the power transmitting path may incorporate a transmission portion (power transmission) of other types such as, for instance, a continuously variable transmission (CVT), acting as an automatic transmission of one kind, and an automatic transmission or the like including a constant-mesh type parallel shaft transmission, well known as a manual shift transmission, which is operative to automatically switch gear positions using select cylinders and shift cylinders. The present invention may be implemented even in such a way.

While the illustrated embodiment has been described above with reference to the automatic transmission portion 20 that is connected to the differential portion 11 in series via the power transmitting member 18, a countershaft may be provided in parallel to the input shaft 14 to allow the automatic transmission portion 20 to be coaxially disposed on an axis of the countershaft. In this case, the differential portion 11 and the automatic transmission portion 20 may be connected to each other in power transmitting capability via a set of transmitting members structured of, for instance, a counter-gear pair acting as the power transmitting member 18, a sprocket and a chain.

Further, the power distributing mechanism 16 of the illustrated embodiment may include, for instance, a differential gear set in which a pinion, rotatably driven with the engine, and a pair of bevel gears, held in meshing engagement with the pinion, are operatively connected to the first electric motor M1 and the power transmitting member 18 (second electric motor M2).

The power distributing mechanism 16 of the illustrated embodiment has been described above as including one set of planetary gear units, the power distributing mechanism 16 may include two or more sets of planetary gear units that are arranged to function as a transmission having three or more speed positions under a non-differential state (fixed shifting state). In addition, the planetary gear unit is not limited to the single-pinion type, but may be of a double-pinion type.

While the shift operating device 50 of the illustrated embodiment has been described with reference to the shift lever 52 operative to select a plurality of kinds of shift positions P_{SH}, the shift lever 52 may be replaced by other type of switches or devices. These may include, for instance a select switch such as a press-button type switch and a slide-type switch available to select one of a plurality of shift positions P_{SH}; a device operative to switch a plurality of shift positions P_{SH} in response not to the manipulation initiated by the hand but to a driver's voice; and a device operative to switch a plurality of shift positions P_{SH} in response to the manipulation initiated by the foot.

While the illustrated embodiment has been described with reference to the shifting range that is established upon manipulating the shift lever 52 to the "M" position, the gear positions may be set, i.e., maximal speed gear positions for respective shifting ranges may be set as the gear positions. In this case, the automatic transmission portion 20 operates so as to allow the gear positions to be switched for executing the shifting action. For example, as the shift lever 52 is manually operated to an up-shift position "+" or a down-shift position "-" in the "M:' position, the automatic transmission portion 20 operates so as to allow any of the 1 st-speed gear position to the 4th-speed gear position to be set depending on the manipulation of the shift lever 52.

Any of controls in the above mentioned embodiments reliability can be performed in combination for the purpose to increase reliability and the like.

The foregoing merely illustrates the embodiments for illustrating the principles of the present invention. It will be appreciated by those skilled in the art that various modifications and alternatives to those details could be developed in the light of the overall teachings of the disclosure.

## Claims

1. A control device for a vehicular drive system,
the vehicular drive system includes (i) an electrically controlled differential portion (16) including a differential mechanism (11) having a first element (RE1) operatively connected to an engine (8) in a drive-power transmissive state, a second element (RE2) connected to a first electric motor (M1), and a third element (RE3) connected to both a power transmitting member (18) and a second electric motor (M2), and distributing an output of the engine to the first electric motor and the power transmitting member, and (ii) a shifting portion (20) disposed in a power transmitting path between the power transmitting member and drive wheels (34); and
when a rotation speed of a given rotary element (RE4 to RE8) of the shifting portion (20) exceeds a first given rotation speed, or when falling of the rotation speed of the given rotary element of the shifting portion in a given high speed rotation state is predicted, the control device (80) limits a rotation speed (N_{E}) of the engine (8)
wherein the rotation speed of the engine is limited by a third electric motor (M3) connected to the engine.

2. The control device for a vehicular drive system according to claim 1, wherein the electrically controlled differential portion of the vehicular drive system is operative as a continuously variable transmission with an operating state of the first electric motor being controlled.

## Patentansprüche

1. Steuervorrichtung für eine Fahrzeugantriebssystem,
wobei das Fahrzeugantriebssystem (i) einen elektrisch gesteuerten Differentialabschnitt (16), das einen Differentialmechanismus (11) mit einem ersten Element (RE1), das betriebsfähig mit einer Maschine (8) in einem Antriebsleistungsübertragungszustand verbunden ist, einem zweiten Element (RE2), das mit einem ersten Elektromotor (M1) verbunden ist, und einem dritten Element (RE3), das sowohl mit einem Leistungsübertragungsteil (18) als auch einem zweiten Elektromotor (M2) verbunden ist, aufweist und eine Ausgangsleistung der Maschine auf den ersten Elektromotor und das Leistungsübertragungsteil verteilt, sowie (ii) einen Schaltabschnitt (20) aufweist, der in einem Leistungsübertragungsweg zwischen dem Leistungsübertragungsteil und Antriebsräder (34) angeordnet ist, wobei
die Steuervorrichtung (80) eine Drehzahl (N_{E}) der Maschine (8) begrenzt, wenn eine Drehzahl eines gegebenen Drehelements (RE4 bis RE8) des Schaltabschnitts (20) eine erste gegebene Drehzahl überschreitet oder wenn ein Abfallen der Drehzahl des gegebenen Drehelements des Schaltabschnitts in einem Zustand mit einer gegebenen hohen Drehzahl vorhergesagt wird,
wobei die Drehzahl der Maschine durch einen mit der Maschine verbundenen dritten Elektromotor (M3) begrenzt wird.

2. Steuervorrichtung für ein Fahrzeugantriebssystem nach Anspruch 1, wobei der elektrisch gesteuerte Differentialabschnitt des Fahrzeugantriebssystems als ein stufenloses Getriebe mit einem gesteuerten Betriebszustand des ersten Elektromotors betreibbar ist.

## Revendications

1. Dispositif de commande pour un système de conduite de véhicule,
le système de conduite de véhicule comprend (i) une partie différentielle électriquement commandée (16) comprenant un mécanisme différentiel (11) ayant un premier élément (RE1) fonctionnellement raccordé à un moteur (8) dans un état de transmission de puissance d'entraînement, un deuxième élément (RE2) raccordé à un premier moteur électrique (M1), et un troisième élément (RE3) raccordé à la fois à un composant de transmission de puissance (18) et un deuxième moteur électrique (M2), et la distribution d'une sortie du moteur au premier moteur électrique et au composant de transmission de puissance, et (ii) une partie de changement de vitesse (20) disposée dans un trajet de transmission de puissance entre le composant de transmission de puissance et des roues motrices (34) ; et
lorsqu'une vitesse de rotation d'un élément rotatif donné (RE4 à RE8) de la partie de changement de vitesse (20) dépasse une première vitesse de rotation donnée, ou lorsque la baisse de la vitesse de rotation de l'élément rotatif donné de la partie de changement de vitesse dans un état de rotation à vitesse élevée donné est prédite, le dispositif de commande (80) limite une vitesse de rotation (N_{E}) du moteur (8),
dans lequel la vitesse de rotation du moteur est limitée par un troisième moteur électrique (M3) raccordé au moteur.

2. Dispositif de commande pour un système de conduite de véhicule selon la revendication 1, dans lequel la partie différentielle électriquement commandée du système de conduite de véhicule est opérationnelle en tant que transmission variable en continu en fonction d'un état opérationnel du premier moteur électrique étant commandé.
